# EUROPÄISCHE PATENTSCHRIFT

(11) **EP 1 167 479 B1**
(45) Veröffentlichungstag und Bekanntmachung des Hinweises auf die Patenterteilung: **22.09.2004**
(21) Anmeldenummer: 01890193.4
(22) Anmeldetag: 21.06.2001
(51) Int. Cl.: C09D 163/00, C09D 5/00, C08G 59/18, C08G 59/50

(54) **Anstrichmittel für Unterwasser-Anwendung**
Underwater application of a paint
Peinture pour application sous-marine

(30) Priorität: 21.06.2000 AT 10792000
(43) Veröffentlichungstag der Anmeldung: 02.01.2002
(73) Patentinhaber: Lestin & Co. Tauch- Bergungs- und Sprengunternehmen Gesellschaft m.b.H., 1050 Wien (AT)
(72) Erfinder: Federspiel, Per G., Mag. Dr., 1230 Wien (AT)
(74) Vertreter: Wildhack, Helmut, Dr. Dipl.-Ing.

(56) Entgegenhaltungen:
- US-A- 4 022 946
- PATENT ABSTRACTS OF JAPAN vol. 005, no. 016 (C-041), 30. Januar 1981 (1981-01-30) & JP 55 144053 A (NIPPON OIL CO LTD), 10. November 1980 (1980-11-10)

## Beschreibung

Die Erfindung betrifft ein neues - Anstrichmittel bzw. eine neue Anstrichmasse bzw. -farbe für eine in bzw. unter Wasser, insbesondere Seewasser, erfolgende Aufbringung auf dort befindliche Objekte, Flächen, Substrate, Untergründe od.dgl., aus Holz, Kunststoff, Stein, Beton, metallischem Material, Stahl, metall-gecoatetem Stahl od.dgl. auf Basis von Epoxid- und/oder Bisphenol-A- und/oder -F-Harzen als Harz-Komponente und (Poly-)Aminen als Härter-Komponente sowie weiters Beschleunigem, Pigmenten, wie z.B. solchen auf Metalloxid-Basis, und weiters Verlaufsadditiven, Glättungsmitteln und anderen Zusätzen.

Sie betrifft im Speziellen ein Anstrichmittel, das tatsächlich vor Ort unter der Wasseroberfläche, also im Wasser selbst, auftragbar sein soll. An ein derartiges Unterwasser-Anstrichmittel wird eine Reihe von Anforderungen gestellt, die neben den üblichen Anforderungen an Anstrichsysteme durch die spezifische Art und den außergewöhnlichen Ort der Aufbringung bedingt sind.

Es ist davon auszugehen, dass ein Einsatz und eine Verarbeitung von Anstrichmitteln, Überzugsmassen, Lacken od.dgl. unter Wasser nur dann möglich ist, wenn die Dichte des Anstriches größer ist als jene des umgebenden Wassers. Es muss daher dafür gesorgt werden, dass das Anstrichmittel mit sogenannten Schwerstoffen, also z.B. mit Pigmenten mit Dichten von größer als 2,5 g/cm³, bevorzugt sogar größer als 5,0 g/cm³ "beschwert" ist. Die Dichte der fertigen Mischung des Anstrichmittels soll zumindest 1,2 g/cm³ betragen und sollte für einen Einsatz in Salzwasser eher größer sein als für ein solches, das in Süßwasser einzusetzen ist.

Eine weitere Forderung besteht darin, dass das Anstrichmittel so weit wasserabstoßend sein muss, dass es unter Wasser zu keinen Auflösungstendenzen kommt. Er muss jedoch gleichzeitig die antagonistisch scheinende Tendenz zeigen, über trennende Wasserschichten zwischen ihm und einem Untergrund hinweg wieder zusammenzulaufen, und durch den unvermeidlichen Wasserfilm hindurch auf einem Untergrund eine hohe Haftung an den zu schützenden, jedoch vom Wasser voll benetzten Oberflächen herzustellen.

Zu allererst stellt im Rahmen eines Beschichtungsvorganges unter Wasser die Haftung der Anstrichmittel-Grundierung am Untergrund ein zentrales Problem dar, wonach sich dann das weitere Problem der Haftung des Deckanstriches auf dem zuerst aufgebrachten Grundanstrich stellt. Es besteht nun ein neuer Grundgedanke der Erfindung darin, dass der auf den Auftragsflächen immer vorhandene, dort haftende und trennend wirkende Wasserfilm zumindest während des Kontaktes zwischen Anstrichmittel und Untergrund beim Auftragen des Anstrichmittels von demselben selbst aufgenommen, also sozusagen "aufgesaugt" oder "weggesaugt" wird. Der Deckanstrich sollte das zumindest auch können, aber er sollte außerdem noch einen tatsächlich dichten Oberflächenfilm ausbilden.

Um den verständlicherweise vielfältigen und unter Umständen sogar einander widersprechenden Forderungen an ein vor Ort unter Wasser aufzutragendes Anstrich-System gerecht zu werden, bedarf es einer großen Zahl von alle Faktoren berücksichtigenden und aufeinander abgestimmten Überlegungen, von denen hier bisher ohne Anspruch auf Vollständigkeit einige bloß angedeutet worden sind.

Nun in den zur Erfindung führenden Überlegungen tiefergehend, besteht die Forderung, dass die für den Auftrag und dessen Effektivität entscheidende und jedenfalls störende Wasserkomponente durch diesbezüglich wirksame Anstrich-Hauptbestandteile und/oder Additive verdrängt und/oder am besten von denselben zumindest für die Zeit des Auftragsvorgangs aufgenommen werden sollte.

In jedem Fall muss jedoch eine vollständige Reaktion oder gar eine Auflösung der Inhaltsstoffe im Wasser vermieden werden, womit insgesamt gesehen ein Basis-System mit gleichzeitig hydrophoben und hydrophilen Eigenschaften benötigt wird.

Wenn es z.B. gelingt, eine echte chemische Bindung des Bindemittel-Polymers an die zu schützende Metall-, insbesondere Stahloberfläche herbeizuführen, kann ein solcher Vorgang zur Haftung einen wesentlichen Beitrag leisten. Es ist also davon auszugehen, dass durch Einsatz geeigneter Komponenten die Ausbildung echter chemischer Bindungen zwischen zumindest einzelnen Komponenten des Anstrichmittels und dem Substrat zu fördern ist.

Die Aushärtungszeit eines Anstrich-Systems wird stark von der Temperatur beeinflusst, die meist eher niedrig ist, sie soll selbstverständlich dennoch so kurz sein, dass ein Deckanstrich, also ein Überstreichen des Grundanstriches mit einem Deckanstrich relativ bald nach dessen Aufbringung erfolgen kann.

Weiters bleibt die Aufgabe, die Abriebfestigkeit durch entsprechende Einstellung der Flexibilität und durch eine Zugabe von Hartstoffen zu regulieren.

Der Schutz des Substrates gegen Korrosion ist die eigentliche Aufgabe des erfindungsgemäßen Vor-Ort-Direkt-Anstriches. Um einen diesbezügliche ausreichenden Schutz des Untergrundes zu gewährleisten, ist es vorteilhaft, eine Reihe von Mechanismen, wenn möglich, in Kombination miteinander zu nutzen.

So ist elektrochemische Korrosion modellhaft als Stromfluss zwischen anodischen und kathodischen Bereichen eines Objektes zu verstehen. Ein Ansatz zur Lösung des Korrosionsproblems kann daher darin bestehen, das Schließen eines Stromkreises unter Einbeziehung des umgebenden Wassers zu verhindern. Dies lässt sich insbesondere durch ausreichend elektrisch-isolierende, wasser- und gasdichte Schichten erreichen, wobei gerade der Deckanstrich eine tragende Rolle spielt. Eine weitere Möglichkeit liegt in einem kathodischen Korrosionsschutz, welcher durch Aufbringen einer dem umgebenden Medium gegenüber passiven Metallschicht erreichbar ist, die elektrochemisch unedler ist als der mit dem Anstrichmittel beschichtete Stahl. Durch Anwendung von anodisch wirkenden Korrosionsschutz-Pigmenten kann das Korrosionspotential des Metalls, insbesondere Stahls, angehoben und auf diese Art eine Schutzwirkung erreicht werden.

Um thermisch bedingte und vor allem mechanische Bewegungen des Anstrich-Untergrundes aufnehmen und ausgleichen zu können, ist es nötig, dass der fertige, ausgehärtete Anstrich einerseits ein ausreichendes und anderseits ein dauerhaft flexibles Verhalten aufweist. Wenn sich diese Forderung nicht erfüllen lässt, kommt es zu einer Versprödung, was unweigerlich zuerst zu Mikrorissen und dann zu Rissen führt, die letztlich den Schichtaufbau zerstören.

Die Farbe des Anstrichstoffes spielt an sich eine untergeordnete Rolle. Für die Verarbeitung vor Ort, also unter Wasser, ist es allerdings wesentlich, dass beim Auftragen des Deckanstriches ein Farbkontrast zum Grundanstrich besteht, sodass auf einfache Weise eine optische Kontrolle des Auftrags bzw. von dessen Vollständigkeit und Qualität ermöglicht wird.

Alle bisher erörterten Ausgangsprämissen, Eigenschaften und Bedingungen gelten in allgemeiner Form für jede Unterwasser-Anwendung. Ein Einsatz in bzw. unter Seewasser erfordert infolge des korrosiv hochwirksamen und aggressiven Salzgehaltes zusätzliche Verbessungen im Unterwasser-Anstrichsystem.

Es müssen nicht - wie oben erörtert - nur die Wassermoleküle zwischen Metall-Untergrund und Grundanstrich von demselben "weggesaugt" bzw. ad- oder absorbiert werden, sondern auch die im Wasser gelösten, korrosiv wirksamen Ionen - also in erster Linie Chlorid - Ionen müssen vom genannten Anstrich aufgenommen werden, da diese Ionen sonst zum Fortschreiten der Korrosion unterhalb der Beschichtung führen können.

Es ist davon auszugehen, dass auf dem Untergrund vor einem Auftragen des Anstrichmittels bereits Korrosionsprodukte vorliegen, da zwischen der Vorbereitung des Untergrundes, wie z.B. durch Sandstrahlen, und dem Aufbringen des Anstriches Zeit vergeht, innerhalb welcher das Metall einem Chlorid-Ionen-Angriff ausgesetzt ist. Die sich dabei rasch bildenden Korrosionsprodukte, z.B. Eisenchlorid-Hydratkomplexe, müssen durch enstprechende Wirkung des Anstriches in neutrale Produkte umgewandelt werden, da sie, z.B. in Form von Lochfraß, auf die weitere Korrosion beschleunigend wirken.

Auch im Bereich des Übergangs vom Grundanstrich zum Deckanstrich ist das Vorhandensein von korrosiv wirksamen Ionen, wie Chloridionen, infolge ihrer schädlichen Einwirkung auf bestimmte Bestandteile des Anstriches, wie z.B. auf Zink-Pigmente, nicht wünschenswert. Es bleibt also die Aufgabe, eine entsprechende Lösung für die Chlorid-Elimination zu finden.

Weiters darf die Filmbildung beim Auftragen des Anstrichmittels an einer Außenfläche, also insbesondere des Deckanstriches, durch die im Wasser gelösten Salze nicht beeinträchtigt werden.

Die Wirksamkeit des neuen, unter Wasser aufzubringenden Unterwasser- bzw. Unter-Seewasser-Anstriches als Barriere gegen Wasser und Sauerstoff muss um jene eines Gegenwirkens gegen einen diffusiven Transport von Chlorid durch die Beschichtung hindurch erweitert werden.

Was die Grund-Beschichtung betrifft, soll sie in erster Linie eine hohe Haftung zum Untergrund selbst aufbauen und auch zumindest bis zur Härtung aufrecht erhalten. Darüber hinaus muss diese Grundbeschichtung vor Korrosion schützen und für den Deckanstrich eine gut überschichtbare Oberfläche bieten und, siehe oben, nach Möglichkeit einen deutlichen optischen Kontrast. Der Grundanstrich kann vorteilhafterweise auch reaktive Pigmente enthalten, welche allerdings vor einem langfristigen Salzwasserangriff geschützt werden müssen.

Es besteht nun zur Erreichung der nötigen Haftung des Anstrichmittels auf dem Untergrund die Möglichkeit, dass der flüssige Anstrich Stoffe enthält, die mit Wasser chemisch zu reagieren imstande sind und das Wasser auf diese Weise entfernen und unwirksam machen. Diese Stoffe müssen aber gleichzeitig vor einem Eindringen von Wasser geschützt werden. Außerdem sollte der Anstrich in begrenztem Ausmaß Wasser auch auf andere Art einbinden und über dünne Wasserfilme hinweg wieder verfließen lassen können. Der Anstrich muss auch schon länger unter Wasser befindliche und damit stark hydrophilisierte Stahloberflächen benetzen können, also in seiner Benetzungs- und Haftfähigkeit besser sein als das sich dort schon lange befindliche und ohnedies allgegenwärtige Wasser.

Großangelegte Versuchsreihen haben gezeigt, dass die angeführten widersprüchlichen Eigenschaften durch einen Einsatz herkömmlicher Hydrophobierungs-Reagenzien nicht erreichbar sind.

So musste beispielsweise folgendes festgestellt werden: Durch Verwendung von chlorierten Paraffinen, also von stark wasserabstoßenden nichtflüchtigen Lösungsmitteln, wird der Anstrich zwar vor dem Eindringen von Wasser geschützt, gleichzeitig werden aber zu wenige reaktive Verbindungen für die Haftungsausbildung freigegeben. Chlorierte Paraffine zeigen zudem eine zersetzende Wirkung, sowohl auf die Harze selbst als auch auf die Härter und verringern die Lagerstabilität der Mischungen. Sie stellen außerdem wassergefährdende Stoffe dar, die im Laufe der Zeit aus dem Bindemittel auswandern. Darüber hinaus setzen sie im Inneren des Anstriches Chlorid-Ionen frei, die z.B. im Anstrich enthaltendes Zink und unter Umständen auch die zu schützende Metall-, insbesondere Stahloberfläche selbst angreifen können.

Ein Einsatz von hydrophobierenden Siloxanen, also von oberflächenaktiven Substanzen, die sich an der Grenzfläche zwischen Anstrich und Wasser anreichern, kann zu mangelhafter Benetzung der Metall-, insbesondere Stahloberfläche, und damit zu herabgesetzter Haftung führen und dennoch partielle Auflösungstendenzen des viskos-flüssigen Anstriches nicht verhindern. Mit dieser Substanzklasse konnten keineswegs befriedigende Ergebnisse erzielt werden. Auch der Einsatz von hydrophilierenden Fluorcarbonen oder einer Kombination von Fluorcarbonen und Siloxanen lässt positive Ergebnisse in diesem Sinne nicht erwarten.

Herkömmliche Lösungsmittel, raffinierte Teeröle oder Dicarbonsäureester werden, wie sich zeigte, nicht in die Bindemittelstruktur aufgenommen, können aber auch nicht in das umgebende Wasser entweichen. Sie können aber durch Diffusion langsam ausgewaschen werden, wodurch sich die Beständigkeit des Anstriches bei gleichzeitig zunehmender Versprödung vermindert.

Die Erfindung hat sich, ausgehend von den dargelegten Überlegungen und auf Basis eingehender Versuche die Aufgabe gestellt, ein neues Konzept für eine kombinierte Hydrophobierung/Hydrophilierung bei Unterwasser-Vorort-Aufbringung von Anstrichen für einen Korrosionsschutz zu erarbeiten.

Ausgehend von der Überlegung, dass ein ausreichend hydrophobes, "weitmaschiges" Polymer chemisch ähnliche, vergleichsweise jedoch hydrophile und kleinere und beweglichere Moleküle vor einem direkten Wasserangriff schützen würde, gleichzeitig aber eine ausreichende Reaktivität gewährleistet wäre, wurde ein neues Unterwasser-Anstrichmittel mit einer neuen, ganz spezifischen Kombination von Aminhärtem und einer ebenso wirkenden Kombination aus epoxidfunktionellen Harzen entwickelt, welches die oben definierten gewünschten Eigenschaften aufweist.

Gegenstand der Erfindung ist somit ein neues Anstrichmittel, -masse bzw. -farbe, welches bzw. welche für einen Auftrag bzw. für eine Aufbringung in bzw. unter Wasser auf dort befindliche Objekte, Flächen, Substrate, Untergründe od.dgl., bevorzugt aus Holz, Kunststoff, Stein, Beton, metallischen Materialien, Stahl, metall-gecoatetem Stahl od.dgl. vorgesehen ist und dessen bzw. deren Basis mit Epoxid- und/oder Bisphenol-Aund/oder -F-Harzen als Harz-Komponente und (Poly-)Aminen als Härter-Komponente gebildet ist und welches bzw. welche weiters Beschleuniger, Pigmente, Verlaufsadditive, Glättungsmittel und andere Zusatz- und Hilfsmittel enthält, und welches bzw. welche dadurch gekennzeichnet ist, dass
- in das für eine Vor-Ort-Direkt-Auftragung unter Wasser vorgesehene, metallische und/oder metall-oxidische und/oder nicht metallische Pigmente mit einer Dichte von mindestens 4,0 g/cm³ beinhaltende, selbst eine Dichte von mindestens 1,2 g/cm³, bevorzugt jedoch von mindestens 2,0 g/cm³, aufweisende, Anstrichmittel neben der genannten Harz-Komponente und den sonstigen Bestandteilen,
- als für die Unterwasser-Direkt-Auftrags- bzw. -Streichfähigkeit und für die Haftung des Anstrichmittels auf dem Untergrund unter Wasser wesentlicher Bestandteil eine Härter-Komponente eingebaut bzw. integriert ist, welche mit
- einem in Gegenwart von Wasser aushärtbaren Polyamin-Kombinations-Gemisch, insbesondere -Gel auf Basis von
   a) mindestens einem (an sich bekannten) hochviskosen, hydrophob-hochmolekularen, partiell vernetzten, Polyamin, insbesondere mit mindestens einem Polyetherund/oder Polyetherpolyurethanpolyamin, mit
   b) mindestens einem (ebenfalls an sich bekannten) niedrigviskosen, hydrophil-niedrigmolekularen, insbesondere aliphatischen und/oder cycloaliphatischen, Polyamin, beispielsweise Triethylentetramin (TETA), Polyoxypropylenpolyamin (PEGDA), Trimethylhexamethylendiamin (TMD), p-Aminocyclohexylmethan (PACM), 2, 4, 6-Tridimethylaminomethylphenol (DMP 30), Isophorondiamin (IPD) oder deren Gemischen,
gebildet ist.

Das den Kern der Erfindung darstellende neuartige Polyamin-Härter-Gel in der Masse umfasst die Kombination eines, noch reaktive Gruppen aufweisenden, "wasserverdrängenden" Netzwerkes eines hochmolekularen Polyamins mit einem hydrophilen niedrigmolekularen Polyamin. Das letztgenannte kann gegebenenfalls ein einfaches Diamin sein, welches in das genannte hydrophobe Netzwerk einbaubar bzw. letztlich eingebaut ist.

Im Rahmen der Erfindung besonders bevorzugt ist es, wenn die Harzkomponente des neuen Anstrichmittels mit mindestens einem Epoxid-Harz und/oder mindestens einem Bisphenol-A- und/oder -F-Harz, formuliert mit mindestens einem polyfunktionellen Reaktiv-Verdünner, insbesondere mit mindestens einem solchen aus der Gruppe, bestehend aus Trimethylolpropan, Polypropylenglycol 425, 1,4-Butandiol, 1,6-Hexandiol und Cyclohexandimethanol, vorliegt, wobei die Viskosität des derart verdünnten Einzel-Harzes bzw. Harzgemisches in einem Bereich von 2000 bis 12000 mPa.s liegt.

Zum Zeitpunkt des Auftrags bildet das Anstrichsystem, gemischt aus Harz und Härterkomponente ein Ganzes, das als Ganzes durch seine Konsistenz und seinen Aufbau die genannten gel-artigen Eigenschaften aufweisen muss. Daher ist neben dem Aufbau des Härter-Systems auch der Aufbau des Harz-Systems von wesentlicher Bedeutung. An sich könnte das Anstrichmittel-Gel durchaus aus einer hochmolekularen Harz-komponente und einer niedrigmolekularen Härter-Komponente bzw. umgekehrt, bestehen. Es hat sich jedoch gezeigt, dass es besonders vorteilhaft ist, dass sowohl Harz (über Sauerstoffbrücken) als auch Härter (mit Wasser reagierend) einen wesentlichen Beitrag zur Haftung leisten und daher in beiden niedrigmolekulare Anteile vorliegen, wie dies der Anspruch 2 impliziert. Die Harzkomponente liegt dann ebenfalls sicher als Gel vor und kann auf diese Weise ihren Beitrag zum Gesamtsystem leisten.

Das Harz besteht also nach dieser bevorzugten Ausführungsvariante z.B. aus einer Mischung aus höhermolekularem Bisphenol A bzw. Bisphenol A/F-Gemisch und einem niedrigmolekularem und sehr niedrigviskosem Mono- oder Diglycidyl (-Epoxid) - wie weiter unten ausführlich beschrieben - und bildet so ein dem Härter-System analoges bzw. funktional gleichartiges System.

Nach Mischen der beiden Komponenten beginnt vergleichsweise schnell die Vernetzungsreaktion, es kommt zur Ausbildung dreidimensionaler, anfangs noch lockerer Strukturen, die die gel-artigen und klebstoff-artigen Eigenschaften des Bindemittels noch verstärken. In der Praxis hat sich gezeigt, dass die Verarbeitbarkeit dieser Art von Mischungen durch eine anfängliche Standzeit von ca. 15 min deutlich verbessert wird, was dem beschriebenen Vernetzungsbeginn zuzuschreiben ist. Demgemäß ist es also besonders vorteilhaft, die Komposition der Harz-Komponente ähnlich zu jener der Härter-Komponente zu gestalten.

Ein besonders positiver Nebenaspekt der neuen erfindungsgemäßen Unterwasser-Direkt-Anstrichmittel besteht im vollständigen Fehlen von nichtvernetzbaren, organischen Lackadditiven, die infolge langsamen Auswanderns in das umgebende Wasser die langfristige Beständigkeit des Anstriches vermindern würden.

Ein Anwendungsschwerpunkt des neu entwickelten Anstrichsystems ist dessen Einsatz in Binnengewässern. Gerade in diesen Gewässern spielt der Umweltaspekt eine bedeutende Rolle und praktisch die gesamte Entwicklung des neuen Anstrich-Systems erfolgte unter besonderer Berücksichtigung von dessen Umweltverträglichkeit. So ist es ganz wichtig, dass bei der Verarbeitung und beim Auftrag des Anstrichs keine gefährlichen Stoffe in die Umwelt gelangen. Durch die neue Harz-Härter-Kombination zeigt die noch viskos-flüssige Mischung dieser Komponenten auch unter Wasser und dort selbst im angeströmten Zustand keinerlei Auflösungstendenz und härtet selbst bei extrem niedrigen Temperaturen vollständig aus. Dadurch wird eine Freisetzung der Bindemittelbestandteile praktisch vollständig verhindert.

Das Bindemittel selbst enthält keinerlei toxische Stoffe, darüber hinaus keine Lösungsmittel oder andere nicht gebundene Stoffe, die eine umweltrelevante Wirkung aufweisen. Nur zum Vergleich sei folgendes angeführt: Herkömmliche Anstrichstoffe für ähnliche Anwendungen enthalten als giftig eingestufte Bindemittelbestandteile und Weichmacher wie Benzylalkohol, chlorierte und/oder fluorierte Hydrophobierungsmittel oder aber hochgiftige Teeröle. Das erst später näher erläuterte und günstigerweise verwendete, ungebundene Gleitadditiv (Tego Glide) ist als einziger ungebundener Bindemittelbestandteil für Lebensmittel zugelassen.

Die Einbindung aller Funktional-Additive in das Bindemittel ist insofern von großer Bedeutung, als das bei Unterwasseranwendung den Anstrich vollständig umgebende Wasser (im Vergleich zur Luft) ein Austreten von nichtgebundenen organischen Stoffen an sich deutlich erleichtert. Es musste daher davon ausgegangen werden, dass eventuell vorhandene Lösungsmittel oder Weichmacher bereits nach kurzer Zeit ins Wasser übertreten, was beim neuen System nicht der Fall ist.

Es ist in diesem Sinne - und darauf wird später noch einzugehen sein, vorteilhaft, nur Pigmente zum Einsatz zu bringen, die ungiftig sind und sich umweltneutral verhalten.

Es ist in diesem Sinne - und darauf wird später noch einzugehen sein, vorteilhaft, nur Pigmente zum Einsatz zu bringen, die ungiftig sind und sich umweltneutral verhalten. Die Beschichtung enthält - auch darauf wird später näher eingegangen - weder Blei, noch Chrom, noch andere giftige Schwermetalle.

Sollte es in Zukunft notwendig werden, eine auf dem neuen System beruhende Beschichtung zu sanieren oder zu entfernen, so kann dies ohne nachhaltigen Schaden für die Umwelt mittels Sand- oder Hochdruck-Wasserstrahlen durchgeführt werden. Der dabei abgelöste Abtrag ist umweltneutral und nicht trübend. Er setzt sich aufgrund seiner hohen Dichte ("spezifisches Gewicht") - auch dieser Aspekt wird später genauer behandelt werden- schnell am Gewässergrund ab bzw. kann während der Arbeit abgesaugt und leicht vom Prozesswasser abgetrennt werden.

Was die arbeitshygienischen Aspekte betrifft, sind auch hier die Vorteile groß: Die neuen Anstrichmassen enthalten keinerlei Lösungsmittel und keine als giftig eingestuften Bestandteile. Alle Inhaltsstoffe weisen darüber hinaus einen geringen Dampfdruck auf. Die neuen Anstriche können daher auch in nur wenig gelüfteten Gebäudeteilen, Rohren oder Schächten ohne umfangreiche Sicherheitsvorkehrungen zubereitet und verarbeitet werden.

Was die zahlreichen konkreten Ausführungsformen der neuen Unter-Wasser-Anstrichmittel betrifft, so gibt bezüglich der erfindungswesentlichen Härter-Komponente, also des mit einem hochviskosen und einem niedrigviskosen Polyamin gebildeten gelartigen Gemisches, insbesondere hinsichtlich der Viskosität der genannten, zum Einsatz kommenden Kern-Komponenten und bezüglich der Grenzen der Masseverhältnisse der beiden unterschiedlichen Polyamine zueinander der **Anspruch** 3 näher Auskunft, dem weiters eine nähere Differenzierung der Bereichsgrenzen der Massen-Verhältnisse von hochmolekular-hochviskosem Polyamin zu niedermolekular-niedrigviskosem Polyamin im die wesentliche Härter-Komponente bildenden Polyamin-Kombinations-Gel zu entnehmen ist, die sich danach richtet, ob das sie enthaltende Anstrichmittel für einen ersten Anstrich, also für einen Grundanstrich auf einer Metalloberfläche unter Wasser, oder aber für einen Unterwasser-Deckanstrich, insbesondere auf einem, wie soeben erwähnten Grundanstrich vorgesehen ist.

Der **Anspruch** 4 gibt konkret einen im Rahmen der Erfindung besonders bevorzugt eingesetzten, hydrophob-hochmolekularen Polyamin-Härter an.

Der **Anspruch** 5 nennt zwei ebenfalls bevorzugt eingesetzte, die Hydrophil-Komponente des Polyamin-Kombinations-Gels abgebende niedrigviskose Polyamine mit ihren konkreten Handelsbezeichnungen.

Als Härtungs-Beschleuniger, speziell für Unterwasser-Anstriche vorteilhaft, haben sich solche auf Basis von Mannichbasen erwiesen, wie aus dem **Anspruch** 6 hervorgeht, welcher auch einen, aus diesem Grund bevorzugten, besonderes effektiven Beschleuniger aus dieser Klasse mit seiner Handelsbezeichnung nennt. Wie gefunden wurde, eignet sich für den Spezialzweck der Auftragung der Korrosionsschutz-Farbe unter Wasser ein Beschleuniger-Gemisch auf Basis einer Mannichbase und eines Polymercaptans besonders gut, wie aus diesem Anspruch hervorgeht, der ein spezielles mit seiner konkreten Handelsbezeichnung nennt.

Der **Anspruch** 7 gibt eine für eine erhöhte Haftung der neuen Unterwasser-Anstriche auf einem Metall-Substrat tatsächlich effektive Klasse von Silicium-organischen Verbindungen an und hebt zwei sich für diesen Zweck besonders eignende Methoxysilane mit ihren konkreten Handelsbezeichnungen hervor.

Es hat sich im Rahmen der Versuchsserien gezeigt, dass es zur Erreichung einer hohen Stabilität der neuen Unterwasser-Anstriche besonders günstig ist, wenn, wie gemäß Anspruch 8 vorgesehen ist, die gleichzeitig hydrophile und hydrophobe - als Kern der Härterkomponente erfindungsgemäß vorgesehene - Polyamin-Kombination, die sozusagen eine den Wasserfilm auf einem Untergrund verdrängende und "aufsaugende" Materialmischung darstellt, zusätzlich durch eine Substanz ergänzt wird, welche in Gegenwart von Wasser, insbesondere von Wasser, das aus dem eben genannten Wasserfilm stammt, z.B. in ein dieses Wasser aufnehmendes hydrophiles Siloxan und in eine problemlos und unverzüglich in die Anstrichmasse einwandernde und sich dort sofort integrierende Substanz, wie insbesondere in einen niedrigen Alkohol, zerfällt. Diesbezüglich besonders geeignete Substanzen stellen z.B. Polyalkoxy-Siloxane dar.

Zur soeben angesprochenen Unterstützung des Polyamin-Kombinations-Gels beim "Unterwandern" bzw. "Absaugen" des beim Unterwasser-Anstrich störenden Wasserfilms auf den mit einer Anstrichmasse zu versehenden Flächen können - wie sich gezeigt hat - aber auch weitere, jedoch ganz andere, wasser-ab- und -adsorptive Eigenschaften aufweisende Substanzen in die Anstrichfarbe bzw. in deren Härter-Komponente eingebaut sein, wie insbesondere Vertreter aus der Gruppe, was ebenfalls im Anspruch 8 geoffenbart ist.

Besonders wichtig ist neben der Unschädlichmachung und Verdrängung des Wasserfilms auf den mit der Anstrichmasse unter Wasser zu versehenden Substraten, insbesondere, wenn es um Seewasser geht, ein solider und sicherer Einbau der dort enthaltenen Chlorid-Ionen in den Anstrich, sodass diese lonen nicht mehr mit Metalloberfläche in direkten Kontakt kommen können. Wie gefunden wurde, eignen sich dafür in besonderem Maße Wolframoxide als Pigment-Komponente, wie dies gemäß der Anspruch 9 vorgesehen ist: Wolframoxid führt beim Arbeiten unter Wasser infolge Reaktion mit dem haftungshindernden Wasser und den im Seewasser vorhandenen Chlorid-Ionen zu Wolframsäuren bzw. Wolframaten sowie zu Wolframoxidchloriden, welche, ebenso wie das Wolframoxid, darüber hinaus den wesentlichen Vorteil der hohen Massen-Dichte haben, die sich letztlich auf die Dichte des Anstrichmittels selbst positiv auswirkt, die, siehe eingangs, ja möglichst hoch sein soll, um ein Aufschwimmen des Anstrichmittels beim Unterwasser-Auftrag zu vermeiden.

Eine weitere besondere Aufgabe des in das erfindungsgemäße Anstrichmittel als bevorzugtes Pigment eingebauten Wolframoxids und/oder metallischen Wolframs sowie des zusätzlich oder alternativ enthaltenen Zinks, Mangans und/oder Magnesiums ist es - siehe dazu den Anspruch 10 - die bisher als Schwerstoffe eingesetzten, umweltgefährdenden Bleiverbindungen aus den Anstrichen völlig zu verbannen. Außerdem bilden Zink, Mangan und Magnesium mit dem Wasserfilm auf dem Substrat Hydroxide und machen so Platz für den Unterwasser-Anstrich, sodass dieser trotz der Allgegenwart von Wasser direkt mit der Substrat-Oberfläche in Kontakt tritt und hochfest, fast klebstoffartig haftet.

Es hat sich gezeigt, dass sich besonders haltbare und in hohem Ausmaß korrosionshemmende Unterwasser-Anstriche mit einem Anstrich-System erreichen lassen, in welchem sowohl in die Härter-Komponente als auch in die Harz-Komponente vor deren Vereinigung zum fertigen Anstrichmittel jeweils das Wolfram, Wolframoxid und gegebenenfalls zusätzlich Eisenglimmer eingearbeitet ist bzw. sind.

Eine Variante des Anstrichmittels, die sich insbesondere für einen mechanisch hochfesten und abriebfesten Unterwasser-Deckanstrich eignet, bildet den Gegenstand des **Anspruches** 11.

Um die Bildung von für die Korrosionsschutzwirkung schädlichen Schäumen und Mikro-Luftbläschen in den Anstrichmassen im Zuge von deren Auftragung, die im augenblicklichen Stadium der Entwicklung meist noch mit Pinseln od. dgl. erfolgt, zu vermeiden, ist es gemäß dem Anspruch 12 in seiner zweiten Variante günstig, polyethermodifizierte Polysiloxane in dieselben einzubringen.

Als für die Zwecke von unter Wasser auf ein Substrat auftragbaren Massen im Rahmen der vorliegenden Erfindung besonders geeignet, haben sich für den Grundanstrich Harz-Komponenten mit Zusammensetzungen gemäß der in den Tabellenblättern der nachfolgenden Beispiele enthaltenen Tabelle 1 und 3 innerhalb der dort für die einzelnen Komponenten angegebenen Grenzrezepturen bewährt.

Ganz Analoges gilt für die Härter-Komponente des Grundanstrichs mit innerhalb der in den Tabellen 2 und 4 des Beispielsteils angegebenen Grenzwerte liegenden Zusammensetzungen der sie aufbauenden einzelnen Bestandteile.

Besonders günstig ist es, wenn, ein einen Unterwasser-Grundanstrich und einen derartigen Deckanstrich umfassender Unterwasser-Gesamtanstrich durch eine Kombination der Härter- und Harz-Komponenten gemäß den erwähnten Tabellen 1 und 3 mit jenen der Tabellen 2 und 4 gebildet ist.

Engere Rezeptur-Bereiche von für hoch-haftfähige Unterwasser-Grundanstriche und -Deckanstriche geeignete Anstrichmassen sowie für deren jeweils zusammengehörige Harz-plus-Härter-Komponenten offenbaren die **Ansprüche** 13 und 14.

Der **Anspruch** 15 enthält Angaben bezüglich der Grenzen bevorzugterweise einzuhaltender Massen-Verhältnisse zwischen Harz- und Härter-Komponente in den erfindungsgemäßen Anstrichmitteln für Unterwasser-Grund- und Deckanstrich-Aufbringung, wobei es sich als günstig erwiesen hat, die Masseanteile an Pigment(en), bezogen auf die jeweilige Gesamtmasse der erfindungsgemäßen Anstrichfarben innerhalb der im Anspruch genannten Grenzen zu halten.

### Anhand der Beispiele wird die Erfindung näher erläutert:

Aus Gründen der Übersichtlichkeit sind die durch die Beispiele zu erläuternden Grenzrezepturen in Tabellenform gebracht.

### Beispiele 1 bis 4:

Die Beispiele zeigen, innerhalb welcher Bereiche die Anteile jeder der einzelnen Bestandteile der Harz- und der Härter-Komponente der neuen Unterwasseranstriche schwanken darf, um letztlich - selbstverständlich den an sich schwierigen Bedingungen von Unterwasser-Arbeiten entsprechend - ohne zusätzliche Probleme, wie Aufschwimmen der Anstrichmasse, Auflösung von einzelnen Komponenten derselben, Schwierigkeiten beim Auftrag infolge mangelnder Haftung u.dgl., zu Unterwasser-Anstrichen zu gelangen, welche sich durch hohe mechanische Robustheit und ausgezeichneten Korrosionsschutz für die mit ihnen versehenen Metall-Oberflächen unter Wasser auszeichnen.

Die Beispiele 1 und 2 zeigen, jeweils getrennt, die Grenzrezepturen der für die Grundierung vorgesehenen Harz-Komponente und Härter-Komponente der erfindungsgemäßen Anstrichmasse und die Beispiele 3 und 4, ebenfalls getrennt, die Grenzrezepturen der für die Deckanstriche vorgesehenen Harz-Komponente und Härter-Komponente:

### Beispiele und Tabellen 1 bis 4:

### Grundierung

**Tabelle 1**

| | | Grenzrezepturen g/kg | |
|---|---|---|---|
| **Harz** | | min | max |
| Mischung aus Epoxidharzen Bisphenol A und/oder F, formuliert mit mono- oder polyfunktionellen Reaktivverdünnern, Viskositätsbereich 2.000mPa.s- 12.000 mPa.s | | 180 | 300 |
| Verlaufsadditive z.B. Polyethersiloxane | | 0,5 | 5 |
| Haftungsvermittler auf Basis Silane | | 1 | 5 |
| Thixotropierung z.B. pyrogene Kieselsäure oder ebensolches Aluminiumoxid | | 0 | 20 |
| Zinkstaub Korngröße 2 µm - 50 µm | | 100 | 200 |
| Wolframpulver Korngröße 2 µm - 50 µm | | 0 | 50 |
| Wolframoxid gelb oder blau, Korngröße 1 µm - 30µm | | 250 | 500 |
| Eisenglimmer AS | | 0 | 300 |
| Zeolithe | | 0 | 200 |
| anorganische Farbpigmente wie Titandioxid, Echtschwarz, u.ä. | | 0 | 200 |
| organische Farbpigmente | | nach Bedarf | |
| Antifoulings | | nach Bedarf | |

**Tabelle 2**

| | | Grenzrezepturen | |
|---|---|---|---|
| **Härter** | | min | max |
| Mischung aus niedrigviskosen aliphatischen und Cycloaliphatischen Polyaminen wie z.B. TETA, PEGDA, TMD, IPD, PACM, u.ä. Viskositätsbereich 5mPa.s - 100mPa.s | | 10 | 100 |
| Mischung aus höherviskosen Polyether- und/oder Polyethterpolyurethanpolyaminen oder teilveresterten Anhydriden Viskositätsbereich 10 Pa.s - 20 Pa.s | | 20 | 200 |
| Härter/Beschleuniger/Haftungsvermittler auf Basis Polymerkaptane | | 1 | 30 |
| Beschleuniger wie Mannichbasen oder DMP 30 | | 5 | 30 |
| Haftungsvermittler auf Basis Silane | | 1 | 5 |
| Wolframpulver Korngröße 2 µm - 50 µm | | 0 | 50 |
| Zeolithe | | 0 | 200 |
| Eisenglimmer AS | | 0 | 100 |
| anorganische Farbpigmente wie Titandioxid, Echtschwarz, u.ä. | | 0 | 200 |
| organische Farbpigmente | | nach Bedarf | |
| Antifoulings | | nach Bedarf | |

### Deckbeschichtung

**Tabelle 3**

| | | Grenzrezepturen | |
|---|---|---|---|
| **Harz** | | min | max |
| Mischung aus Epoxidharzen Bisphenol A und/oder F, formuliert mit polyfunktionellen Reaktivverdünnern, Viskositätsbereich 2.000mPa.s-12.000 mPa.s | | 180 | 300 |
| Verlaufsadditive z.B. Polyethersiloxane | | 0,5 | 5 |
| Haftungsvermittler auf Basis Silane | | 1 | 5 |
| Tixotrophierung z.B. pyrogene Kieselsäure oder Aluminiumoxid | | 0 | 50 |
| Wolframpulver Korngröße 2µm - 50 µm | | 50 | 250 |
| Wolframoxid gelb oder blau Korngröße 1µm - 30µm | | 50 | 250 |
| Siliciumcarbid Korngröße 5µm - 50µm | | 50 | 250 |
| Zeolithe | | 0 | 200 |
| anorganische Farbpigmente wie Titandioxid, Echtschwarz, u.ä. | | 0 | 200 |
| organische Farbpigmente | | nach Bedarf | |
| Antifoulings | | nach Bedarf | |

**Tabelle 4**

| | | Grenzrezepturen | |
|---|---|---|---|
| **Härter** | | min | max |
| Mischung aus niedrigviskosen aliphatischen und Cycloaliphatischen Polyaminen wie z.B. TETA, PEGDA, TMD, IPD, PACM, u.ä. Viskositätsbereich 5mPa.s - 100mPa.s | | 10 | 100 |
| Mischung aus höherviskosen Polyether- und/oder Polyethterpolyurethanpolyaminen oder teilveresterten Anhydriden Viskositätsbereich 10 Pa.s - 20 Pa.s | | 20 | 200 |
| Härter/Beschleuniger/Haftungsvermittler auf Basis Polymerkaptane | | 1 | 50 |
| Beschleuniger wie Mannichbasen oder DMP 30 | | 5 | 50 |
| Haftungsvermittler auf Basis Silane | | 1 | 5 |
| Zeolithe | | 0 | 200 |
| anorganische Funktional bzw. Reaktivpigmente Zeolithe, Eisenglimmer | | 0 | 200 |
| anorganische Funktional bzw. Reaktivpigmente Eisenglimmer | | 100 | 250 |
| anorganische Farbpigmente wie Titandioxid, Echtschwarz, u.ä. | | 0 | 200 |
| organische Farbpigmente | | nach Bedarf | |
| Antifoulings | | nach Bedarf | |

Die nachfolgenden, Beispiele 5 bis 8 darstellenden Tabellen 5 bis 8 geben Rezepturen für erfindungsgemäße Unterwasser-Anstrichmassen für Grund- und Deckanstriche wieder, welche unter Wasser zu Überzügen an Schleusentoren verarbeitet worden sind und sich seither im rauhen Alltagsbetrieb ausgezeichnet bewährt haben.

In diesen Tabellen bedeuten:

| | |
|---|---|
| D.E.R. 331, D.E.R. 736 P | Bisphenol-A-Harze |
| BM | Bindemittel |
| BMA | Bindemittelanteil |
| PVolAnteil | Pigmentvolumenanteil |

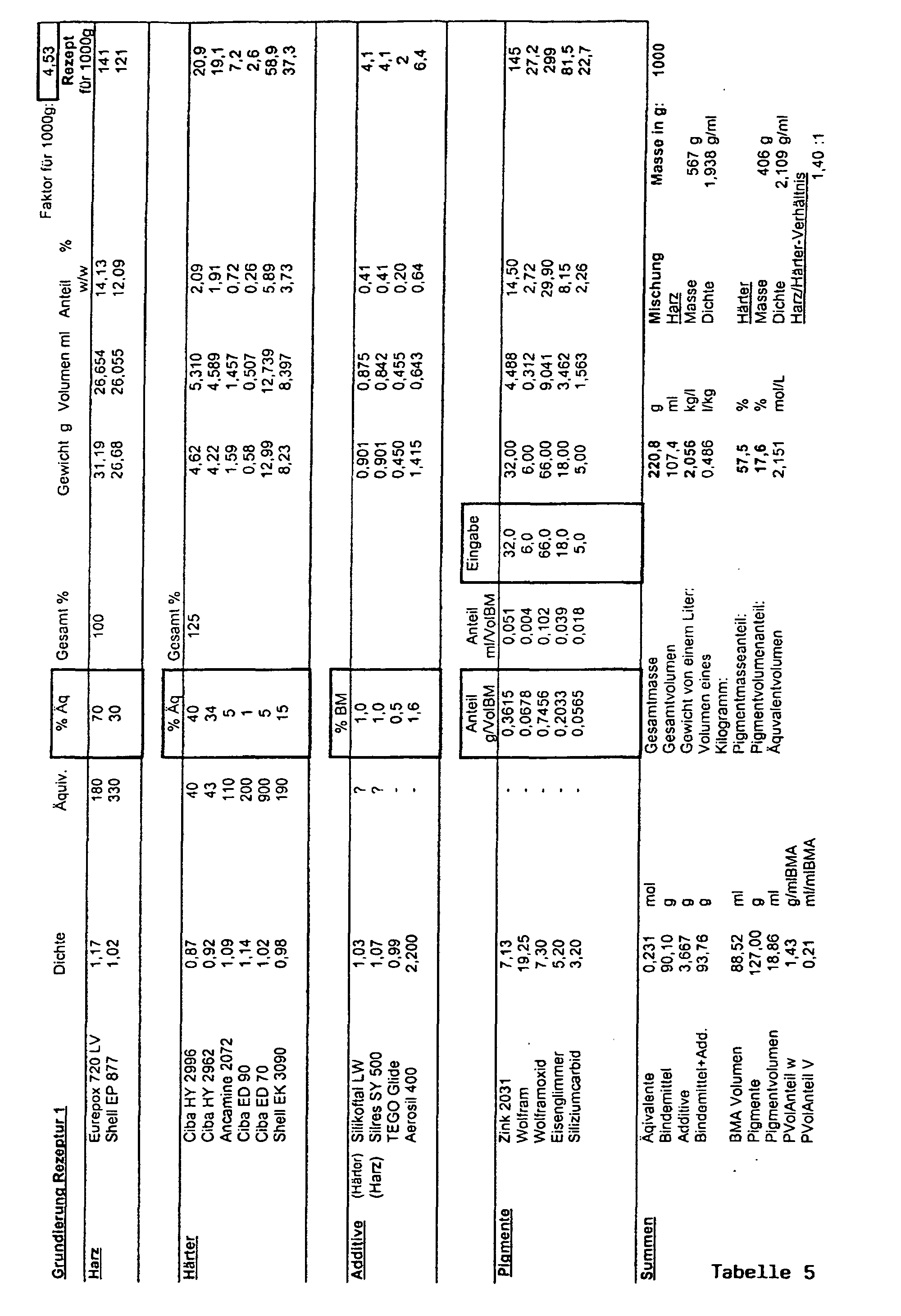

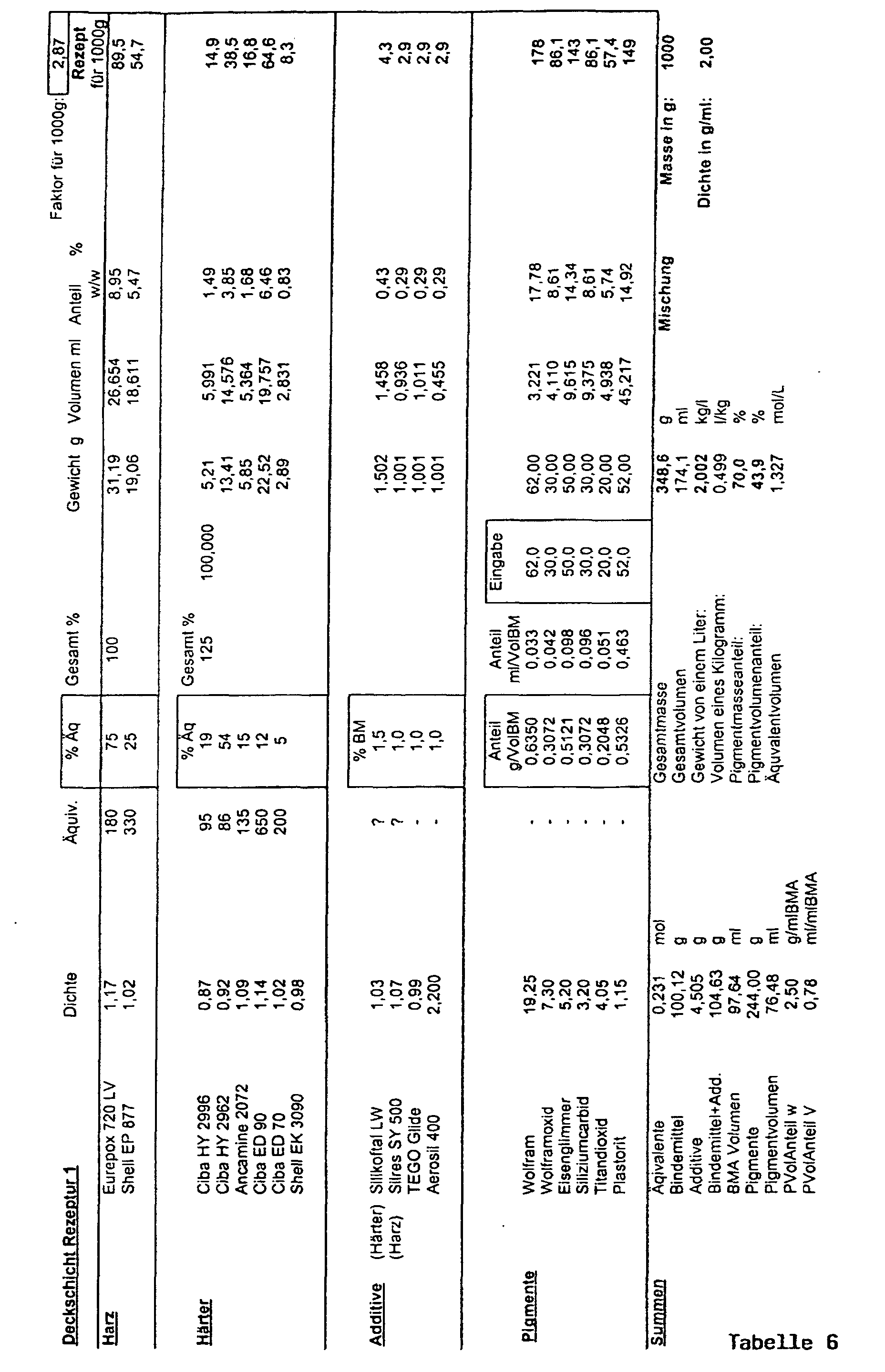

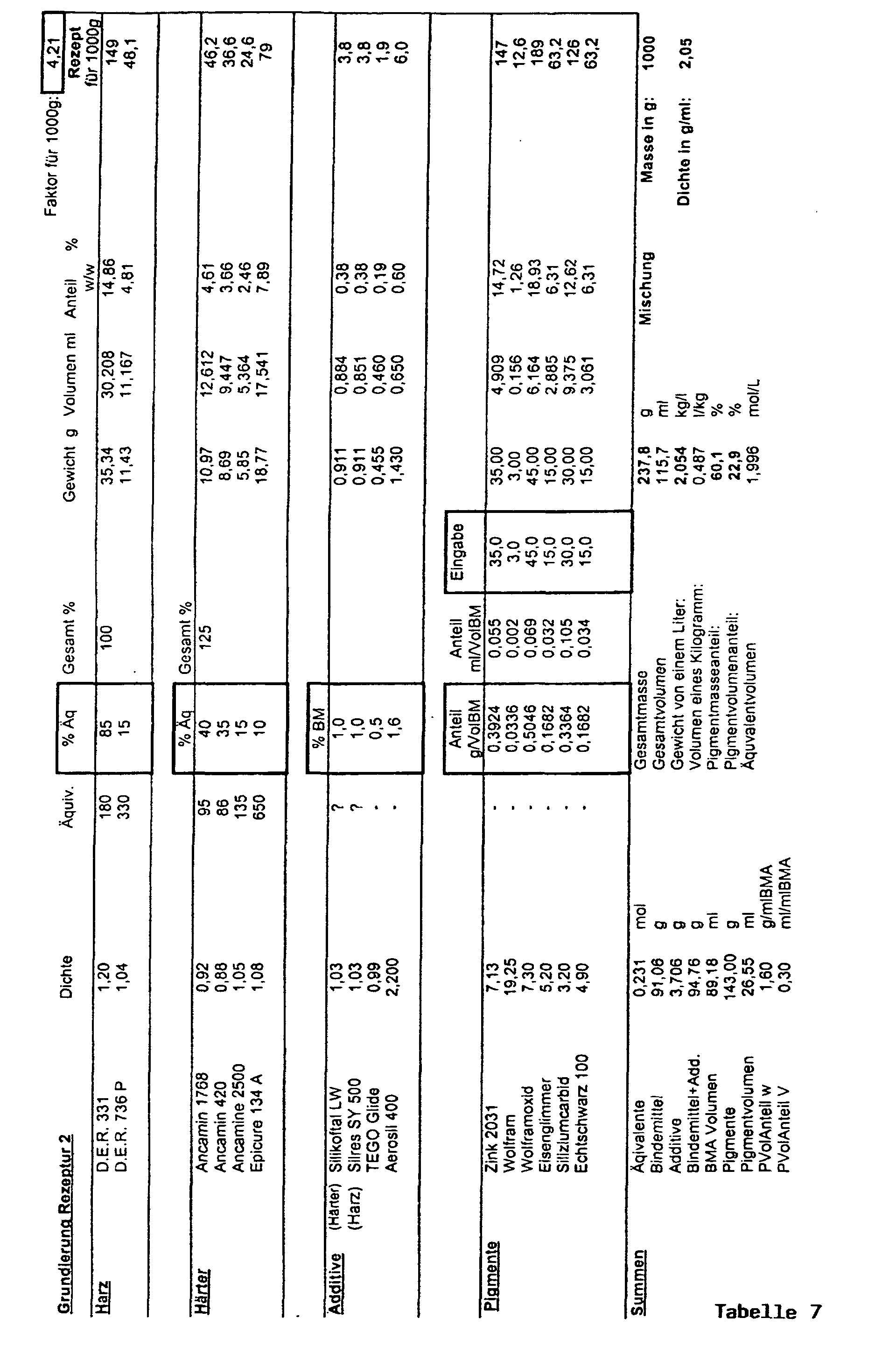

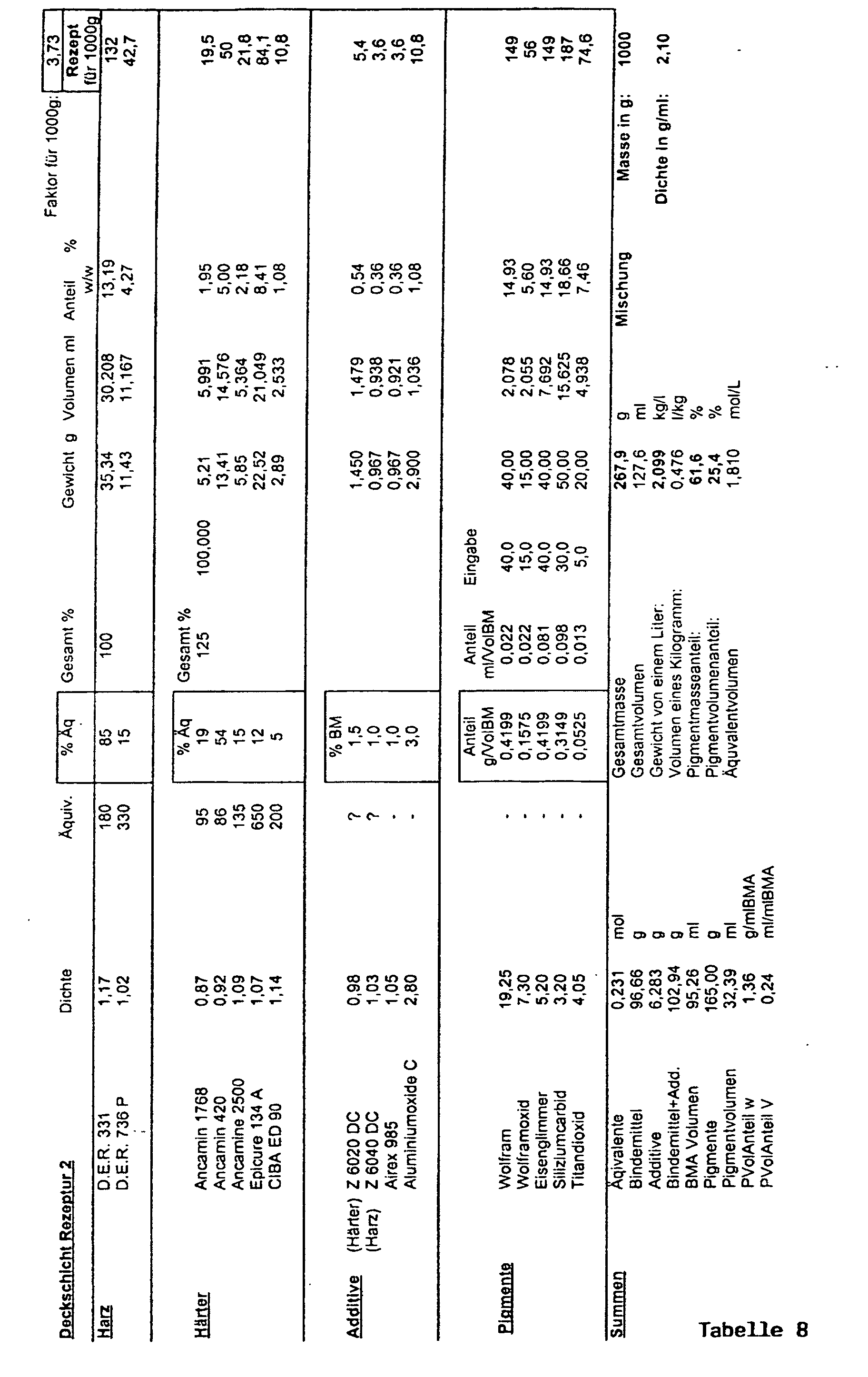

Für die Prüfung der Qualität der mit den erfindungsgemäßen Anstrichmassen gemäß den Beispielen hergestellten Unterwasser-Anstrichen sind die folgenden Testverfahren zum Einsatz gekommen und haben - zusammengefasst - folgende Ergebnisse erbracht.

### Salzsprühtest nach ISO 7253:

Vorbehandelte (Sa 2½) und beschichtete Probenplatten werden 6000 Stunden einem neutralen Salzsprühnebel (50g/l NaCI-Lösung) bei 35°C ausgesetzt. Die Beschichtung ist kreuzweise eingeschnitten. Folgende Kriterien sind nach Ablauf des Versuchs zu erfüllen:

| | |
|---|---|
| Ablösung im Schnittbereich | weniger als 3,5 mm |
| Blasengrad nach ISO 4628-2 | Rating 0 |
| Rostgrad nach ISO 4628-3 | Rating 0 |
| Risse nach ISO 4628-4 | Rating 0 |
| Haftung nach ISO 4624 | größer 5 N/mm²; max. 50% Abnahme |

### Kondensationskammertest nach ISO 6270:

Vorbehandelte (Sa 2½) und beschichtete Probenplatten werden 6000 Stunden unter Kondensationsbedingungen über einem Wasserbad mit 40°C gelagert. An der Plattenrückseite herrscht eine Temperatur von 23°C. Die Beschichtung ist kreuzweise eingeschnitten. Folgende Kriterien sind nach Ablauf des Versuchs zu erfüllen:

| | |
|---|---|
| Ablösung im Schnittbereich | weniger als 3,5 mm |
| Blasengrad nach ISO 4628-2 | Rating 0 |
| Rostgrad nach ISO 4628-3 | Rating 0 |
| Risse nach ISO 4628-4 | Rating 0 |
| Haftung nach ISO 4624 | größer 5 N/mm²; max. 50% Abnahme |

### Zyklische UV-Bewitterung und Salzsprühtest nach ISO 1514:

Vorbehandelte (Sa 2½) und beschichtete Probenplatten werden 4200 Stunden in einer zyklischen Abfolge Salznebel ausgesetzt, getrocknet und unter UV-Licht gelagert. Die Temperatur beträgt 35°C. Als Salzlösung dient synthetisches Seewasser nach ASTM D 1141. Die Beschichtung ist kreuzweise eingeschnitten. Folgende Kriterien sind nach Ablauf des Versuchs zu erfüllen:

| | |
|---|---|
| Ablösung im Schnittbereich | weniger als 3,5 mm |
| Blasengrad nach ISO 4628-2 | Rating 0 |
| Rostgrad nach ISO 4628-3 | Rating 0 |
| Risse nach ISO 4628-4 | Rating 0 |
| Haftung nach ISO 4624 | größer 5 N/mm²; max. 50% Abnahme |

### Kathodischer Korrosionsschutztest nach ASTM G8:

Vorbehandelte (Sa 2½) und beschichtete Probenplatten werden in einer Natriumsalzlösung kathodisch gegen eine Opferanode geschaltet. Die Lösung enthält je 1 % NaCl, Na₂SO₄ und Na₂CO₃; die Temperatur beträgt 23°C. Die versuchsdauer beträgt 30 Tage. Die Beschichtung ist enthält einen runde Fräsung von 7 mm Durchmesser. Folgende Kriterien sind nach Ablauf des Versuchs zu erfüllen:

| | |
|---|---|
| Ablösung im Fräsungsbereich | weniger als 10 mm zusätzlicher Durchmesser |
| Blasengrad nach ISO 4628-2 | Rating 0 |

### Filiformkorrosion nach DIN EN 4623:

Vorbehandelte (Sa 2½) und beschichtete Probenplatten werden rechtwinkelig eingeschnitten und einer Abfolge von Tauchbad und Feuchtlagerphasen ausgesetzt. Das Tauchbad besteht aus einer NaCI-Lösung mit einer Konzentration von 50 g/l und einer Temperatur von 40°C. Die Feuchtlagerung wird bei 40°C und 80 % Luftfeuchte vorgenommen. Die Prüfdauer beträgt 30 Tage. Folgende Kriterien sind nach Ablauf des Versuchs zu erfüllen:

| | |
|---|---|
| Maximale Ausdehnung | weniger als 5 mm |
| vorherrschende Ausdehnung | weniger als 3,5 mm |
| Blasengrad nach ISO 4628-2 | Rating 0 |
| Rostgrad nach ISO 4628-3 | Rating 0 |
| Risse nach ISO 4628-4 | Rating 0 |

### Ergebnisse:

Die untersuchten Testpaneele mit Unterwasser-Anstrichen bzw. Anstrichkombinationen gemäß den Beispielen und Tabellen 1 bis 8 zeigten in keinem einzigen Fall abseits von den normgemäß verletzten Stellen Blasenbildung, Rost oder Risse. Die Ablösung der Beschichtung im Salzsprühtest durch Unterrostung im Schnittbereich betrug bei zwei von drei Platten weniger als 3,5 mm, die Haftzugwerte lagen vor der Untersuchung bei über 10 N/mm² und nahmen im Verlauf der Untersuchung nur geringfügig ab (ca. 20 %).

Nach dem Kondensationskammer-Versuch zeigte sich bei allen Beispiels-Proben ebenfalls extrem geringfügige Ablösung im Schnittbereich, und eine gewisse Abnahme der Haftzugwerte im Bereich von unter 40 %, was durchaus noch im akzeptablen Bereich liegt.

Im Weather-o-Meter-Test, also bei zyklischer UV-Bewitterung, wurden ebenfalls in allen Fällen die Grenzwerte unterschritten. Die Abnahme der Haftzugwerte bewegte sich im Bereich der Messwertschwankungen.

Der Test unter kathodischen Bedingungen ergab nur eine geringfügige Ausbreitung der ursprünglichen Fräsung von 6 mm (zusätzlicher Durchmesser; entsprechend 3,5 mm + 6 mm).

Filiformkorrosion konnte nicht beobachtet werden.

Die Haftzugwerte der Beschichtung lagen in jedem Fall über 5 N/mm², im allgemeinen lagen sie bei im Salzwasser unter Wasser aufgetragenen Schichten zwischen 8 N/mm² und 12 N/mm². Im Süßwasser aufgetragene Schichten wiesen im Mittel nur etwas geringere Werte auf. Wurde die Beschichtung unter trockenen Bedingungen appliziert, erhielt man ebenfalls Werte zwischen 8 N/mm² und 12 N/mm².

Es hat sich weiters gezeigt, dass sehr gute Haftzugswerte auch auf Beton erreicht werden. Das gilt sowohl für feuchten, gealterten, oder frischen, also bloß wenige Stunden alten, Beton. Ebenfalls gute Haftung weist die Beschichtung bei Auftrag auf trockenem mit Flugrost bedecktem Stahl auf, was bei Anwendung an Luft ebenfalls besonders vorteilhaft ist.

Die Untersuchungsergebnisse insgesamt zeigen deutlich, dass die im Salzwasser unter Wasser aufgetragene Beschichtung herkömmlichen Korrosionsschutzbeschichtungen für den Salzwassereinsatz nicht nur zumindest ebenbürtig sind sondern diese weit übertreffen. Die hohen Haftzugwerte bei Unterwasser-Auftrag entsprechen zum Teil eher den Werten für Klebstoffe als für Beschichtungen und erleichtern den Vor-Ort-Auftrag unter Wasser wesentlich.

## Patentansprüche

1. Anstrichmittel, -masse bzw. -farbe, welches bzw. welche für einen Auftrag bzw. für eine Aufbringung in bzw. unter Wasser auf dort befindliche Objekte, Flächen, Substrate, Untergründe od.dgl., bevorzugt aus Holz, Kunststoff, Stein, Beton, metallischen Materialien, Stahl, metall-gecoatetem Stahl od.dgl. vorgesehen ist und dessen bzw. deren Basis mit Epoxid- und/oder Bisphenol-A- und/oder -F-Harzen als Harz-Komponente und (Poly-)Aminen als Härter-Komponente gebildet ist und welches bzw. welche weiters Beschleuniger, Pigmente, Verlaufsadditive, Glättungsmittel und andere Zusatz- und Hilfsmittel enthält, **dadurch gekennzeichnet,**
- **dass** in das für eine Vor-Ort-Direkt-Auftragung unter Wasser vorgesehene, metallische und/oder metall-oxidische und/oder nicht-metallische Pigmente mit einer Dichte von mindestens 4,0 g/cm³ beinhaltende, selbst eine Dichte von mindestens 1,2 g/cm³ aufweisende, Anstrichmittel neben der genannten' Harz-Komponente und den sonstigen genannten Bestandteilen,
- als für die Unterwasser-Direkt-Auftrags- bzw. -Streichfähigkeit und für die Haftung des Anstrichmittels auf dem jeweiligen Untergrund unter Wasser wesentlicher Bestandteil eine Härter-Komponente integriert ist, welche mit
- einem in Gegenwart von Wasser aushärtbaren Polyamin-Kombinations-Gemisch bzw. Polyamin-Kombinations-Gel auf Basis von
a) mindestens einem hochviskosen, hydrophob-hochmolekularen, partiell vernetzten, Polyamin mit
b) mindestens einem niedrigviskosen, hydrophil-niedrigmolekularen, insbesondere aliphatischen und/oder cycloaliphatischen, Polyamin aus der Gruppe Triethylentetramin (TETA), Polyoxypropylenpolyamin (PEGDA), Trimethylhexamethylendiamin (TMD), p-Aminocydohexylmethan (PACM), 2, 4, 6-Tri/dimethylaminomethylphenol (DMP 30), Isophorondiamin (IPD) od.dgl.
gebildet ist.

2. Anstrichmittel nach Anspruch 1, **dadurch gekennzeichnet, dass** dessen Harz-Komponente mit mindestens einem Epoxid-Harz und/oder mindestens einem Bisphenol-A- und/oder -F-Harz, formuliert mit mindestens einem polyfunktionellen Reaktiv-Verdünner aus der Gruppe Trimethylolpropan, Polypropylenglycol 425, 1,4-Butandiol, 1,6-Hexandiol und Cydohexandimethanol, vorliegt, wobei die Viskosität des derart verdünnten Einzel-Harzes bzw. Harzgemisches in einem Bereich von 2000 bis 12000 mPa.s liegt.

3. Anstrichmittel nach Anspruch 1 oder 2, **dadurch gekennzeichnet,**
- **dass** das in ihm als wesentliche Komponente bzw. Härterkomponente enthaltene Polyamin-Kombinations-Gemisch bzw. -Gel
a) mindestens ein höherviskoses Polyether- oder Polyetherpolyurethanpolyamin, mit einer Viskosität innerhalb eines Bereiches von 10 bis 20 Pa.s und
b) mindestens ein niedrigviskoses aliphatisches und/oder cycloaliphatisches Polyamin aus der im Anspruch 1 genannten Gruppe, mit einer Viskosität innerhalb eines Bereiches von 5 bis 100 mPa.s
umfasst, wobei
- die beiden Gruppen von Polyaminen im Verhältnis von 20 : 1 bis 1 : 1 zueinander vorliegen, und/oder
- **dass** die beiden genannten Gruppen von Polyaminen a) und b)
i) für Grundanstriche im Verhältnis von 10 : 1 bis 1 : 5, insbesondere von 2:1 bis 1 : 1, und
ii) für Deckanstriche, insbesondere auf einem Grundanstrich gemäß i) im Verhältnis vor 20 : 1 bis 1 : 5, insbesondere von etwa 1 : 1
zueinander vorliegen.

4. Anstrichmittel nach einem der Ansprüche 1 bis 3, **dadurch gekennzeichnet, dass** für Unterwasser-Grundanstrich(e) und/oder Deckanstrich(e) - in dasselbe als Härter-Komponente ein Polyamin-Kombinations-Gel integriert ist, dessen hydrophob-hochmolekularer Polyamin-Härter durch ein polyetherpotyurethan-modifiziertes Polyamin mit der Bezeichnung "CIBA EUREDUR 70" gebildet ist.

5. Anstrichmittel nach einem der Ansprüche 1 bis 3, **dadurch gekennzeichnet, dass** für Unterwasser-Grundanstrich(e) - in das Anstrichmittel als Härter-Komponente ein Polyamin-Kombinations-Gel integriert ist, dessen hydrophil-niedrigmolekulares Polyamin durch ein aliphatisches Polyamin mit der Bezeichnung "CIBA Härter HY 2996", und/oder durch ein cycloaliphatisches Polyamin mit der Bezeichnung "CIBA Härter HY 2962" gebildet ist.

6. Anstrichmittel nach einem der Ansprüche 1 bis 5, **dadurch gekennzeichnet , dass** für Unterwasser-Grundanstrich(e) und/oder Deckanstrich(e) - in dasselbe (dieselben) zumindest ein auf einer Mannichbase basierender Beschleuniger, vorzugsweise ein solcher mit der Bezeichnung "SHELL DX 185", ohne oder mit einem geringen Anteil im Bereich von etwa 0,5 Gew.-%, jeweils bezogen auf die Gesamtmenge des Anstrichmittels, an Benzylalkohol, in Kombination mit einem viskosen, flexibilisierenden und haftungssteigernden Beschleuniger auf Polymercaptan-Basis, vorzugsweise mit einem solchen mit der Bezeichnung "CIBA EUREDUR 90", integriert ist.

7. Anstrichmittel nach einem der Ansprüche 1 bis 5, **dadurch gekennzeichnet, dass** in dasselbe ein Polyamin-Kombinations-Gel integriert ist, welches zur Haftungsverbesserung unter Wasser zumindest ein amin-funktionelles und/oder epoxid-funktionelles Methoxysilan, vorzugsweise ein solches mit der Bezeichnung "DOW CORNING Z 6040" und/oder "DOW CORNING Z 6020", enthält.

8. Anstrichmittel nach einem der Ansprüche 1 bis 7, **dadurch gekennzeichnet, dass** es zur Unterstützung der Bindung von Wasser auf der Substrat-Oberfläche bzw. des auf dem jeweiligen, mit dem Unterwasser-Anstrich zu versehenden Substrat festhaftenden Wasserfilmes, mindestens ein - in ein hydrophile OH-Gruppen aufweisendes Siloxan und in einen sich in das Anstrichmittel integral inkorporierenden niederen Alkohol, insbesondere Methanol, zerfallendes - Polyalkoxy- bzw. Pofymethoxy-Siloxan und/oder mindestens einen feinteiligen, hydrophilen, natürlichen oder künstlichen Zeolith enthält.

9. Anstrichmittel nach einem der Ansprüche 1 bis 8, **dadurch gekennzeichnet, dass** es - zur Unterstützung der Bindung von Wasser auf der Substrat-Oberfläche bzw. des auf dem jeweiligen, mit dem Unterwasser-Anstrich zu versehenden Substrat festhaftenden Wasserfilmes sowie zur Einbindung von Anionen, insbesondere von in Seewasser vorhandenem Chlorid - sich mit dem genannten Wasser zu schwer löslicher Wolframsäure bzw. zu schwer löslichem(n) Eisen-Wolframat(en) und mit Chlorid-Ionen zu schwer löslichen Wolframoxidchloriden umsetzendes Wolframoxid enthält.

10. Anstrichmittel nach einem der Ansprüche 1 bis 9, **dadurch gekennzeichnet, dass** es als Ersatz für Blei-Verbindungen als Pigment mindestens ein Pigment bzw. ein Pigment-Gemisch mit einer Dichte von mehr als 5 g/cm³ aus der Gruppe der schwer-lösliche Metall(hydr)oxide bildenden Metalle Zink, Magnesium und Mangan, weiters Wolframoxid und/oder feinteiliges metallisches Wolfram und gegebenenfalls zusätzlich Eisenglimmer (Eisenoxid) enthält, wobei vorteilhafterweise das metallische Wolfram und/oder Wolframoxid und der gegebenenfalls vorgesehene Eisenglimmer (Eisenoxid) schon vor Vereinigung von Härter- und Harz-Komponente sowohl in die Härter- als auch in die Harz-Komponente integriert ist bzw. sind.

11. Verfahren nach einem der Ansprüche 1 bis 106, **dadurch gekennzeichnet,**
- **dass** es für einen - auf einem durch Auftrag mindestens eines der Anstrichmittel gemäß einem der Ansprüche 1 bis 10 auf ein sich unter Wasser befindliches Substrat erhaltenen Grundanstrich aufzutragenden - Deckanstrich, gegebenenfalls unter entsprechender Verminderung des Gehaltes an Wolfram und/oder Wolframoxid, als Pigment(e) zur Steigerung der Abriebfestigkeit Siliciumcarbid und/oder Wolframcarbid enthält.

12. Verfahren nach einem der Ansprüche 1 bis 10, **dadurch gekennzeichnet, dass** es - zur Eliminierung von Lufteinschlüssen und/oder von durch Zersetzungsvorgänge generierten Mikroblasen in dem unter Wasser aufgetragenen Anstrich - mindestens ein in dessen Polymernetzwerk nicht eingebundenes, lösungsmittelfreies Polysiloxan oder polyethermodifiziertes Polysiloxan enthält.

13. Anstrichmittel nach einem der Ansprüche 1 bis 12, **dadurch gekennzeichnet,**
- **dass** es für einen Unterwasser-Direkt-Grundanstrich gemäß einem der vorangegangenen Ansprüche vorgesehen ist und als Härter-Komponente ein Polyamin-Kombinations-Gel, bevorzugt in einer Menge von 115 bis 150 g pro 1000 g Gesamt-Anstrichmittel, enthält, welches Gel selbst insgesamt eine Kombination folgender handelsüblicher Komponenten in folgenden Zusammensetzungs-Mengen in Gramm pro 1000 g Gesamt-Anstrichmittel,
| Bezeichnung: | Zusammensetzungs- Bereich: |
|---|---|
| CIBA HY 2996; niedrigviskoses Polyamin | 23,5 - 28,0 |
| CIBA HY 2962, niedrigviskoses Polyamin | 22,5 - 27,0 |
| SHELL DY 185; Mannichbase | 13,5 - 18,0 |
| CIBA ED 90;Polymercaptan | 2,5 - 3,3 |
| CIBA ED 70; hochviskoses Polyamin | 62,0 - 67,5 |
| DOW CORNING Z 6020;epoxyfunktionelles Silan | 3,5 4,5 |
sowie gegebenenfalls zusätzlich als nicht gebundene Anteile etwa folgende Mengen an
| | |
|---|---|
| Benzylalkohol: | 0,25 bis 0,75 % |
| Methylisobutylketon: | 0,1 bis 1,0 % und |
| Verlaufmittel: | 0,1 bis 0,3 %, |
jeweils bezogen auf 100 % Gesamt-Anstrichmittel, enthält, und
- **dass** es als Harz-Komponente insgesamt eine Kombination folgender handelsüblicher Komponenten in folgenden Zusammensetzungs-Mengen in Gramm pro 1000 g Gesamt-Anstrichmittel
| Bezeichnung: | Zusammensetzungs. Bereich: |
|---|---|
| SHELL EP 828; Bisphenol A Harz | 165,0 - 175,0 |
| SHELL EP 877; Diepoxid | 70,0 - 80,0 |
| DOW CORNING Z 6040; methoxyfunktionelles Silan | 3,0 - 4,5 |
| TEGO GLIDE; Siloxan | 1,5 - 2,5 |
| AEROSIL; feindisperses SiO₂ | 2,0 - 3,0 |
| ZINK 2012 | 130,0 - 150,0 |
| ZINK 2031 | 18,0 - 22,0 |
| WOLFRAM | 27,0 - 33,0 |
| WOLFRAMOXID | 30,0 - 36,0 |
| Eisenglimmer | 85,0 - 95,0 |
enthält.

14. Anstrichmittel nach einem der Ansprüche 1 bis 12, **dadurch gekennzeichnet,**
- **dass** es für einen Unterwasser-Direkt-Deckanstrich, insbesondere auf einem Unterwasser-Direkt-Grundanstrich gemäß einem der vorangegangenen Ansprüche vorgesehen ist, und als Härter-Komponente(n), insgesamt ein Polyamin-Kombinations-Gel mit folgenden handelsüblichen Komponenten in folgenden Zusammensetzungs-Mengen in Gramm pro 1000 g Gesamt-Anstrichmittel
| Bezeichnung: | Zusammensetzungs-Bereich |
|---|---|
| CIBA HY 2996; niedrigviskoses Polyamin | 16,0 - 20,0 |
| CIBA HY 2962; niedrigviskoses Polyamin | 16,0 - 20,0 |
| SHELL DY 185; Mannichbase | 13,0 - 17,0 |
| CIBA ED 90; Polymercaptan | 4,0 - 5,0 |
| CIBA ED 70; hochviskoses Polyamin | 120,0 - 135,0 |
| DOW CORNING Z 6020; epoxyfunktionelles Silan | 3,3 - 4,1 |
sowie gegebenenfalls zusätzlich als nicht gebundene Anteile etwa folgende Mengen an
| | |
|---|---|
| Benzylalkohol | 0,25 bis 0,75 % |
| Methylisobutylketon | 0,5 bis 1,5 % und |
| Verlaufmittel | 0,1 bis 0,3 %, |
jeweils bezogen auf 100 % Gesamt-Anstrichmittel, enthält und
- **dass** es als Harz-Komponente insgesamt eine Kombination folgender Bestandteile in folgenden Zusammensetzungs-Mengen in Gramm pro 1000 g Gesamt-Anstrichmittel
| Bezeichnung: | Zusammensetzungs- Bereich |
|---|---|
| SHELL EP 828, Bisphenol A-Harz | 155,0 - 165,0 |
| SHELL EP 877, Diepoxid | 65,0 - 75,0 |
| DOW CORNING Z 6040, methoxyfunktionelles Silan | 3,8 - 4,2 |
| TEGO GLIDE, Siloxan | 1,5 - 2,5 |
| AEROSIL, feindisperses SiO₂ | 2,0 - 2,5 |
| WOLFRAM | 170,0 - 195,0 |
| WOLFRAMOXID | 64,0 - 72,0 |
| Eisenglimmer | 170,0 - 195,0 |
| Siliciumcarbid | 125,0 - 150,0 |
enthält.

15. Anstrichmittel nach einem der Ansprüche 1 bis 14, **dadurch gekennzeichnet ,**
- **dass** es für einen Unterwasser-Direkt-Grundanstrich ein Masse-Verhältnis von Harz-Komponente zu Härter-Komponente von 7,5 : 1 bis 5,5 : 1, insbesondere von 6,0 : 1 bis 6,5 : 1, aufweist und/oder
- **dass** es für einen Unterwasser-Direkt-Deckanstrich ein Masse-Verhältnis von Harz-Komponente zu Härter-Komponente von 3,5 : 1 bis 5 : 1, insbesondere von 4,0 : 1 bis 4,5 : 1, aufweist und/oder
- **dass** sowohl für einen Unterwasser-Direkt-Grundanstrich als auch für einen darauf aufzubringenden Deckanstrich - dessen Pigment-Masseanteil, jeweils bezogen auf die Gesamtmasse, in einem Bereich von 5,3 bis 6,5 % und dessen Pigment-Volumenanteil in einem Bereich von 15 bis 25%, insbesondere von 17,5 bis 21,5 %, liegt.

## Claims

1. A paint, which is provided for application in water or underwater to objects, surfaces, substrates or the like located there, preferably of wood, plastics, stone, concrete, metal materials, steel, metal-coated steel or the like, and whereof the base is formed by epoxy and/or bisphenol A and/or bisphenol F resins as the resin component and (poly)amines as the curing component, and which furthermore contains accelerators, pigments, flow control agents, surfacers and other additives and auxiliaries, **characterised**
- **in that** there is integrated into the paint which is provided for application directly on site underwater, contains metal and/or metal-oxide and/or non-metallic pigments having a density of at least 4.0 g/cm³ and itself has a density of at least 1.2 g/cm³, as well as the said resin component and the other constituents mentioned,
- as an essential constituent for the direct application and paintability underwater and for adhesion of the paint to the respective substrate underwater, a curing component which is formed by
- a blended polyamine mixture or a blended polyamine gel, capable of curing in the presence of water and based on
a) at least one high-viscosity hydrophobic/high-molecular and partially cured polyamine with
b) at least one low-viscosity hydrophilic/low-molecular, in particular aliphatic and/or cycloaliphatic, polyamine from the group comprising triethylene tetramine (TETA), polyoxypropylene polyamine (PEGDA), trimethylhexamethylene diamine (TMD), p-aminocyclohexyl methane (PACM), 2,4,6-tri/dimethylaminomethyl phenol (DMP 30), isophorone diamine (IPD) or the like.

2. A paint according to Claim 1, **characterised in that** the resin component thereof is present with at least one epoxy resin and/or at least one bisphenol A and/or bisphenol F resin formulated with at least one polyfunctional reactive thinner from the group comprising trimethylol propane, polypropyleneglycol 425, 1,4-butanediol, 1,6-hexanediol and cyclohexane dimethanol, with the viscosity of the single resin or resin mixture thinned in this way being in the range from 2000 to 12000 mPa.s.

3. A paint according to Claim 1 or 2, **characterised**
- **in that** the blended polyamine mixture or gel contained therein as an essential component or curing component includes
a) at least one relatively high-viscosity polyether polyamine or polyether polyurethane polyamine having a viscosity within the range from 10 to 20 Pa.s, and
b) at least one low-viscosity aliphatic and/or cycloaliphatic polyamine from the group mentioned in Claim 1, having a viscosity within the range from 5 to 100 mPa.s,
with
- the two groups of polyamines being in a ratio of 20:1 to 1:1 to one another, and/or
- the two said groups of polyamines a) and b)
i) are in a ratio of 10:1 to 1:5, in particular of 2:1 to 1:1, to one another for primer coats, and
ii) are in a ratio of 20:1 to 1:5, in particular approximately 1:1, to one another for topcoats, in particular on a primer coat in accordance with i).

4. A paint according to one of Claims 1 to 3, **characterised in that** for underwater primer coat(s) and/or topcoat(s) there is integrated therein as a curing component a blended polyamine gel whereof the hydrophobic/high-molecular polyamine curing agent is formed by a polyether polyurethane-modified polyamine having the name "CIBA EUREDUR 70".

5. A paint according to one of Claims 1 to 3, **characterised in that** for underwater primer coat(s) there is integrated into the paint as a curing component a blended polyamine gel whereof the hydrophilic/low-molecular polyamine is formed by an aliphatic polyamine having the name "CIBA curing agent HY 2996" and/or a cycloaliphatic polyamine having the name "CIBA curing agent HY 2962".

6. A paint according to one of Claims 1 to 5, **characterised in that** for underwater primer coat(s) and/or topcoat(s) there is integrated therein at least one accelerator based on a Mannich base, preferably one having the name "SHELL DX 185", with or without a small proportion in the range from approximately 0.5% by weight, in each case relative to the total quantity of paint, of benzyl alcohol, combined with a viscous, flexibilising, adhesion-improving accelerator based on polymercaptan, preferably one having the name "CIBA EUREDUR 90".

7. A paint according to one of Claims 1 to 5, **characterised in that** there is integrated therein a blended polyamine gel which for the purpose of improving adhesion underwater contains at least one amine-functional and/or epoxy-functional methoxysilane, preferably one having the name "DOW CORNING Z 6040" and/or "DOW CORNING Z 6020".

8. A paint according to one of Claims 1 to 7, **characterised in that**, to promote the binding of water on the substrate surface or of the water film adhering firmly to the respective substrate to be provided with underwater paint, it contains at least one polyalkoxy siloxane or polymethoxy siloxane, which breaks down into a siloxane having hydrophilic OH groups and a low alcohol which is integrally incorporated into the paint, in particular methanol, and/or at least one fine-particle hydrophilic natural or synthetic zeolite.

9. A paint according to one of Claims 1 to 8, **characterised in that**, to promote the binding of water on the substrate surface or of the water film adhering firmly to the respective substrate to be provided with underwater paint, and to incorporate anions, in particular chloride present in sea water, it contains tungsten oxide which reacts with the said water to form tungstic acid which is not readily soluble or iron tungstate(s) which is(are) not readily soluble, and with chloride ions to form tungsten oxide chlorides which are not readily soluble.

10. A paint according to one of Claims 1 to 9, **characterised in that**, as a substitute for lead compounds as the pigment, it contains at least one pigment or pigment mixture having a density of more than 5 g/cm³ from the group forming not readily soluble metal (hydr)oxides and comprising the metals zinc, magnesium and manganese, and furthermore tungsten oxide and/or fine-particle metallic tungsten and where appropriate additionally micaceous iron ore (iron oxide), advantageously with the metallic tungsten and/or tungsten oxide and the possibly provided micaceous iron ore (iron oxide) already being integrated into both the curing component and the resin component before the curing component and resin component are combined with one another.

11. A process according to one of Claims 1 to 106 [sic recte -10], **characterised in that**, for a topcoat to be applied to a primer coat which has been obtained by applying at least one of the paints according to one of Claims 1 to 10 to a substrate located underwater, it contains as the pigment(s) silicon carbide and/or tungsten carbide in order to increase the abrasion resistance, where appropriate with a corresponding reduction in the content of tungsten and/or tungsten oxide.

12. A process according to one of Claims 1 to 10, **characterised in that**, in order to eliminate entrapped air and/or microbubbles generated by decomposition procedures in the paint applied underwater, it contains at least one solvent-free polysiloxane or polyether-modified polysiloxane which is not incorporated into the polymer network thereof.

13. A paint according to one of Claims 1 to 12, **characterised**
- **in that** it is provided for a direct underwater primer coat according to one of the preceding claims and contains as the curing component a blended polyamine gel, preferably in a quantity of 115 to 150 g per 1000 g of paint in total, this gel itself containing overall a blend of the following commercially available components in the following quantities by composition in grammes per 1000 g of paint in total
| name: | range by composition: |
|---|---|
| CIBA HY 2996; low-viscosity polyamine | 23.5 - 28.0 |
| CIBA HY 2962, low-viscosity polyamine | 22.5 - 27.0 |
| SHELL DY 185; | 13.5 - 18.0 |
| Mannich base CIBA ED 90; | 2.5 - 3.3 |
| polymercaptan CIBA ED 70; | 62.0 - 67.5 |
| high-viscosity polyamine DOW CORNING Z 6020; | 3.5 - 4.5 |
| epoxy-functional silane | |
and where appropriate in addition, as unbonded components, approximately the following quantities of
| | |
|---|---|
| benzyl alcohol | 0.25 to 0.75% |
| methyl isobutyl ketone | 0.1 to 1.0% and |
| flow control agent | 0.1 to 0.3% |
in each case relative to 100% paint in total, and
**in that** it contains as the resin component overall a blend of the following commercially available components in the following quantities by composition in grammes per 1000 g of paint in total
| name: | range by composition: |
|---|---|
| SHELL EP 828; | 165.0 - 175.0 |
| bisphenol A resin SHELL EP 877; diepoxide | 70.0 - 80.0 |
| DOW CORNING Z 6040; | 3.0 - 4.5 |
| methoxy-functional silane TEGO GLIDE; | 1.5 - 2.5 |
| siloxane AEROSIL; | 2.0 - 3.0 |
| finely divided SiO₂ ZINC 2012 | 130.0 - 150.0 |
| ZINC 2031 | 18.0 - 22.0 |
| TUNGSTEN | 27.0 - 33.0 |
| TUNGSTEN OXIDE | 30.0 - 36.0 |
| Micaceous iron oxide | 85.0 - 95.0 |

14. A paint according to one of Claims 1 to 12, **characterised**
- **in that** it is provided for a direct underwater topcoat, in particular applied to a direct underwater primer coat according to one of the preceding claims, and contains as the curing component(s) overall a blended polyamine gel, having the following commercially available components in the following quantities by composition in grammes per 1000 g of paint in total
| name: | range by composition: |
|---|---|
| CIBA HY 2996; | 16.0 - 20.0 |
| low-viscosity polyamine CIBA HY 2962, | 16.0 - 20.0 |
| low-viscosity polyamine SHELL DY 185; | 13.0 - 17.0 |
| Mannich base CIBA ED 90; | 4.0 - 5.0 |
| polymercaptan CIBA ED 70; | 120.0 - 135.0 |
| high-viscosity polyamine DOW CORNING Z 6020; | 3.3 - 4.1 |
| epoxy-functional silane | |
and where appropriate in addition, as unbonded components, approximately the following quantities of
| | |
|---|---|
| benzyl alcohol | 0.25 to 0.75% |
| methyl isobutyl ketone | 0.2 to 1.5% and |
| flow control agent | 0.1 to 0.3% |
in each case relative to 100% paint in total, and
- **in that** it contains as the resin component overall a blend of the following components in the following quantities by composition in grammes per 1000 g of paint in total
| name: | range by composition: |
|---|---|
| SHELL EP 828, | 155.0 - 165.0 |
| bisphenol A resin SHELL EP 877, | 65.0 - 75.0 |
| diepoxide DOW CORNING Z 6040, | 3.8 - 4.2 |
| methoxy-functional silane TEGO GLIDE, | 1.5 - 2.5 |
| siloxane AEROSIL, | 2.0 - 2.5 |
| finely divided SiO₂ TUNGSTEN | 170.0 - 195.0 |
| TUNGSTEN OXIDE | 64.0 - 72.0 |
| Micaceous iron oxide | 170.0 - 195.0 |
| Silicon carbide | 125.0 - 150.0 |

15. A paint according to one of Claims 1 to 14, **characterised**
- **in that**, for a direct underwater primer coat, it has a mass ratio of resin component to curing component of 7.5:1 to 5.5:1, in particular from 6.0:1 to 6.5:1, and/or
- **in that**, for a direct underwater topcoat, it has a mass ratio of resin component to curing component of 3.5:1 to 5:1, in particular from 4.0:1 to 4.5:1, and/or
- **in that**, both for a direct underwater primer coat and for a topcoat to be applied thereto, the pigment proportion thereof by mass, in each case relative to the total mass, is in the range from 5.3 to 6.5% and the pigment proportion thereof by volume is in the range from 15 to 25%, in particular from 17.5 to 21.5%.

## Revendications

1. Préparation et/ou masse de peinture et/ou peinture de couleur, prévue pour une application et/ou une pose sur des objets, surfaces, substrats, fonds ou similaires se trouvant dans et/ou sous l'eau, de préférence en bois, matière plastique, pierre, béton, matériaux métalliques, acier, acier métallisé ou similaires, et dont la base est constituée par des résines époxydes et/ou bisphénol A et/ou bisphénol F comme composant résine, et des poly(amines) comme composant durcisseur, et qui contient en outre des accélérateurs, pigments, additifs nivelants, agents de lissages et autres additifs et adjuvants,
**caractérisée en ce que**
- dans la préparation de peinture prévue pour une application directe sur place sous l'eau, contenant des pigments métalliques et/ou d'oxyde métallique et/ou non métalliques ayant une masse volumique d'au moins 4,0 g/cm³, et présentant elle-même une masse volumique d'au moins 1,2 g/cm³, est intégré, outre le composant résine mentionné et les autres constituants mentionnés,
- comme constituant essentiel pour l'aptitude à l'application et/ou l'enduction directe sous l'eau et pour l'adhérence de la préparation de peinture sur chaque fond sous l'eau, un composant durcisseur qui est constitué
- d'un mélange d'une combinaison de polyamines et/ou d'un gel d'une combinaison de polyamines durcissable en présence d'eau, à base
a) d'au moins une polyamine de haute viscosité, hydrophobe, de poids moléculaire élevé, partiellement réticulée, avec
b) au moins une polyamine de faible viscosité, hydrophile, de faible poids moléculaire, en particulier aliphatique et/ou cycloaliphatique du groupe constitué de triéthylène tétramine (TETA), polyoxypropylène polyamine (PEGDA), triméthylhexaméthylène diamine (TMD), (p-aminocyclohexyl)méthane (PACM) 2, 4, 6-tridiméthylaminométhylphénol (DMP 30), isophorone diamine (IPD) ou similaire.

2. Préparation de peinture selon la revendication 1, **caractérisée en ce que** son composant résine est présent avec au moins une résine époxyde et/ou au moins une résine bisphénol A et/ou F, formulée avec au moins un diluant réactif polyfonctionnel du groupe constitué de triméthylolpropane, polypropylène glycol 425, 1,4-butanediol, 1,6-hexandiol et cyclohexane diméthanol, la viscosité de la résine seule et/ou du mélange de résines ainsi dilués étant de l'ordre de 2 000 à 12 000 mPa.s.

3. Préparation de peinture selon une des revendications 1 ou 2, **caractérisée en ce que**
- le mélange et/ou le gel d'une combinaison de polyamines qu'il contient comme composant ou composant durcisseur essentiel comprend
a) au moins une polyamine polyéther ou polyétherpolyuréthane de haute viscosité présentant une viscosité de l'ordre de 10 à 20 Pa.s et
b) au moins une polyamine de faible viscosité aliphatique et/ou cycloaliphatique du groupe mentionné dans la revendication 1, présentant une viscosité de l'ordre de 5 à 100 mPa.s,
- les deux groupes de polyamines étant présents dans un rapport de 20:1 à 1:1 l'un par rapport à l'autre et/ou
- les deux groupes de polyamines a) et b) cités étant présents l'un par rapport à l'autre
i) dans un rapport de 10:1 à 1:5, en particulier de 2:1 à 1:1, pour les couches de fond et
ii) dans un rapport de 20:1 à 1:5, en particulier 1:1, pour les couches de finition, en particulier sur une couche de fond selon i).

4. Préparation de peinture selon une des revendications 1 à 3, **caractérisée en ce que** pour la/les couche(s) de fond et/ou la/les couche(s) de finition sous-marines est intégré dans cette dernière comme composant durcisseur un gel d'une combinaison de polyamines, dont le durcisseur polyamine hydrophobe de poids moléculaire élevé est constitué par une polyamine polyétherpolyuréthane modifiée portant la désignation "CIBA EUREDUR 70".

5. Préparation de peinture selon une des revendications 1 à 3, **caractérisée en ce que** pour la/les couche(s) de fond est intégré dans la préparation de peinture comme composant durcisseur un gel d'une combinaison de polyamines, dont la polyamine hydrophile de faible poids moléculaire est constituée par une polyamine aliphatique pourtant la désignation "CIBA Härter HY 2996" et/ou par une polyamine cycloaliphatique portant la désignation "CIBA Härter HY 2962".

6. Préparation de peinture selon une des revendications 1 à 5, **caractérisée en ce que** pour la/les couche(s) de fond et/ou la/les couches de finition sous-marine(s) est intégré dans cette/ces demière(s) au moins un accélérateur basé sur une base Mannich, de préférence celui portant la désignation "SHELL DX 185", avec ou sans une part minime, de l'ordre d'environ 0,5 % en poids sur la base de la quantité totale de préparation de peinture, d'alcool benzylique, combiné à un accélérateur visqueux, assouplissant et améliorant l'adhérence à base de polymercaptan, de préférence celui portant la désignation "CIBA EUREDUR 90".

7. Préparation de peinture selon une des revendications 1 à 5, **caractérisée en ce qu'**est intégré dans cette dernière un gel d'une combinaison de polyamines qui contient pour une amélioration de l'adhérence sous l'eau au moins un méthoxy silane ayant une fonction amine et/ou une fonction époxyde, de préférence un de ceux portant les désignations "DOW CORNING Z 6040" et/ou "DOW CORNING Z 6020".

8. Préparation de peinture selon une des revendications 1 à 7, **caractérisée en ce qu'**elle contient, pour favoriser la liaison de l'eau sur la surface du substrat et/ou sur le film d'eau adhérant au substrat à munir de la peinture sous-marine, au moins un polyalkoxy et/ou polymethoxy siloxane - se décomposant dans un siloxane présentant des groupes hydrophiles OH et dans un alcool faible, en particulier méthanol, s'incorporant intégralement dans la préparation de peinture - et/ou au moins une zéolithe naturelle ou synthétique hydrophile finement dispersée.

9. Préparation de peinture selon une des revendications 1 à 8, **caractérisée en ce qu'**elle contient - pour favoriser la liaison de l'eau sur la surface du substrat et/ou sur le film d'eau adhérant au substrat à munir de la peinture sous-marine, ainsi que pour la fixation des anions, en particulier ceux du chlorure présent dans l'eau de mer, de l'oxyde tungstique se transformant avec l'eau mentionnée en acide tungstique peu soluble et/ou en tungsténate(s) de fer peu soluble(s), et avec les ions de chlorure en oxychlorures de tungstène peu solubles.

10. Préparation de peinture selon une des revendications 1 à 9, **caractérisée en ce que** qu'elle contient comme pigment en remplacement des composés de plomb au moins un pigment et/ou un mélange de pigments ayant une masse volumique de plus de 5g/cm^{3,} appartenant au groupe des métaux formant des (hydr)oxydes peu solubles, zinc, magnésium et manganèse, plus de l'oxyde tungstique et/ou du tungstène métallique finement dispersé et le cas échéant du fer micacé (oxyde de fer), le tungstène métallique et/ou l'oxyde tungstique et le fer micacé (oxyde de fer) le cas échéant prévu(s) étant intégré(s) avantageusement avant la recombinaison du composant résine et durcisseur à la fois dans le composant durcisseur et dans le composant résine.

11. Procédé selon une des revendications 1 à 10 en ce
- qu'il contient pour une couche de finition - à appliquer sur une couche de fond obtenue par l'application sur un substrat se trouvant dans l'eau d'au moins une des préparations de peinture selon une des revendications 1 à 10 - le cas échéant sous réserve d'une réduction correspondante de la teneur en tungstène et/ou oxyde tungstique, comme pigment(s) pour l'augmentation de la résistance à l'abrasion, du carbure de silicium et/ou du carbure de tungstène.

12. Procédé selon une des revendications 1 à 10, **caractérisé en ce qu'**il contient
- pour l'élimination des inclusions d'air et/ou des microbulles générées par les processus de décomposition dans la couche appliquée sous l'eau - au moins un polysiloxane ou un polysiloxane polyéther modifié exempt de solvant non lié dans son réseau polymère.

13. Préparation de peinture selon une des revendications 1 à 12, **caractérisée en ce**
- **qu'**elle est prévue pour une couche de fond à appliquer directement sous l'eau selon une des revendications précédentes, et contient comme composant durcisseur un gel d'une combinaison de polyamines, de préférence dans une quantité de 115 à 150 g pour un total de 1 000 g de la préparation de peinture, lequel gel contient lui-même au total une combinaison des composants suivants du commerce dans les quantités de composition suivantes en grammes pour un total de 1 000 g de la préparation de peinture,
| Désignation | Composition-fourchette |
|---|---|
| CIBA HY 2996 Polyamine de faible viscosité | 23,5 - 28,0 |
| CIBA HY 2962 Polyamine de faible viscosité | 22,5 - 27,0 |
| SHELL DY 185 Base Mannich | 13,5 - 18,0 |
| CIBA ED 90 Polymercaptan CIBA ED 70 | 2,5 - 3,3 |
| Polyamine de haute viscosité DOW CORNING Z 6020 | 62,0 - 67,5 |
| Silane ayant une fonction époxy | 3,5 - 4,5 |
ainsi que le cas échéant comme parts supplémentaires non liées environ les quantités suivantes de :
| | |
|---|---|
| Alcool benzylique | 0,25 à 0,75 % |
| Méthylisobutylecétone | 0,1 à 1,0 % et |
| Agent nivelant | 0,1 à 0,3 %, |
dans tous les cas sur la base d'un total de 100 % de la préparation de peinture, et
- en ce qu'elle contient comme composant résine au total une combinaison des composants suivants du commerce dans les quantités de composition suivantes en grammes pour un total de 1 000 g de préparation de peinture
| Désignation | composition-fourchettes |
|---|---|
| SHELL EP 828 Résine bisphénol A | 165,0 - 175,0 |
| SHELL EP 877 Diépoxyde | 70,0 - 80,0 |
| DOW CORNING Z 6040 Silane ayant une fonction méthoxy | 3,0 - 4,5 |
| TEGO GLIDE Siloxane | 1,5 - 2,5 |
| AEROSIL SiO₂ finement dispersé | 2,0 - 3,0 |
| ZINC 2012 | 130,0 - 150,0 |
| ZINC 3031 | 18,0 - 22,0 |
| TUNGSTENE | 27,0 - 33,0 |
| OXYDE TUNGSTIQUE | 30,0 - 36,0 |
| Fer micacé | 85,0 -95,0 |

14. Préparation de peinture selon une des revendications 1 à 12, **caractérisée en ce**
- **qu'**elle est prévue pour une couche de finition à appliquer directement sous l'eau, en particulier sur une couche de fond à appliquer directement sous l'eau selon une des revendications précédentes, et contient comme composant(s) durcisseur au total un gel d'une combinaison de polyamines comportant les composants du commerce suivants dans les quantités de composition suivantes en grammes pour un total de 1 000 grammes de la préparation de peinture :
| Désignation | Composition- fourchette |
|---|---|
| CIBA HY 2996 Polyamine de faible viscosité | 16,0 - 20,0 |
| CIBA HY 2962 Polyamine de faible viscosité | 16,0 - 20,0 |
| SHELL DY 185 Base Mannich | 13,0 - 17,0 |
| CIBA ED 90 Polymercaptan | 4,0 - 5,0 |
| CIBA ED 70 Polyamine de haute viscosité | 120,0 - 135,0 |
| DOW CORNING Z 6020 Silane ayant une fonction époxy | 3,3 - 4,1 |
ainsi que le cas échéant comme parts supplémentaires non liées environ les quantités suivantes de :
| | |
|---|---|
| Alcool benzylique : | 0,25 à 0,75 % |
| Méthylisobutylecétone | 0,5 à 1,5 % et |
| Agent nivelant | 0,1 à 0,3 %, |
dans tous les cas sur la base d'un total de 100 % de la préparation de peinture, et
- en ce qu'elle contient comme composant résine au total une combinaison des composants suivants du commerce dans les quantités de composition suivantes en grammes pour un total de 1 000 g de préparation de peinture :
| Désignation | Composition-fourchette |
|---|---|
| SHELL EP 828 Résine bisphénol A | 155,0 - 165,0 |
| SHELL EP 877 Diépoxyde | 65,0 - 75,0 |
| DOW CORNING Z 6040 ; Silane ayant une fonction méthoxy | 3,8 - 4,2 |
| TEGO GLIDE | |
| Siloxane | 1,5 - 2,5 |
| AEROSIL SiO₂ finement dispersé | 2,0 - 2,5 |
| TUNGSTENE | 170,0 - 195,0 |
| OXYDE TUNGSTIQUE | 64,0 - 72,0 |
| Fer micacé | 170,0 -195,0 |
| Carbure de silicium | 125,0 - 150,0 |

15. Préparation de peinture selon une des revendications 1 à 14, **caractérisée en ce**
- **qu'**elle présente pour une couche de fond à appliquer directement sous l'eau un rapport massique composant résine/composant durcisseur de 7,5:1 à 5,5:1, en particulier de 6,0:1 à 6,5:1, et/ou
- **qu'**elle présente pour une couche de finition à appliquer directement sous l'eau un rapport massique composant résine/composant durcisseur de 3,5:1 à 5:1, en particulier de 4,0:1 à 4,5:1, et/ou
- **qu'**à la fois pour une couche de fond à appliquer directement sous l'eau et pour une couche de finition à appliquer par-dessus - sa part de pigment en poids sur la base de la masse totale se situe dans une fourchette de 5,3 à 6,5 %, et sa part de pigment en volume se situe dans une fourchette de 15 à 25 %, en particulier de 17,5 à 21,5 %.
